# EUROPEAN PATENT SPECIFICATION

(11) **EP 3 837 312 B1**
(45) Date of publication and mention of the grant of the patent: **17.12.2025**
(21) Application number: 19756074.1
(22) Date of filing: 07.08.2019
(51) Int. Cl.: C08L 9/00, C08L 21/00, C08L 53/02, C09J 109/00, C09J 121/00, C09J 153/02

(54) **MULTILAYER PACKAGING MATERIAL**
MEHRSCHICHTIGES VERPACKUNGSMATERIAL
MATÉRIAU D'EMBALLAGE MULTICOUCHE

(30) Priority: 13.08.2018 US 201862717942 P; 05.12.2018 US 201862775811 P; 25.02.2019 US 201962809945 P
(43) Date of publication of application: 23.06.2021
(73) Proprietor: 3M Innovative Properties Company, Saint Paul, Minnesota 55133-3427 (US)
(72) Inventor: LU, Ying-Yuh, Saint Paul, Minnesota 55133-3427 (US); JOHNSON, Mitchell A.F., Saint Paul, Minnesota 55133-3427 (US); PATNODE, Gregg A., Saint Paul, Minnesota 55133-3427 (US); WEST, Shaun M., Saint Paul, Minnesota 55133-3427 (US); EMSLANDER, Jeffrey O., Saint Paul, Minnesota 55133-3427 (US); HARNDEN, Shannon R.A., Saint Paul, Minnesota 55133-3427 (US); LENICZEK, Katelyn M., Saint Paul, Minnesota 55133-3427 (US); MCMULLEN, Lacey E., Saint Paul, Minnesota 55133-3427 (US); GRYM, Allyson V., Saint Paul, Minnesota 55133-3427 (US)
(74) Representative: Vossius & Partner Patentanwälte Rechtsanwälte mbB
(86) International application number: PCT/US2019/045521
(87) International publication number: WO 2020/036787

(56) References cited:
- WO-A1-2018/022495
- US-A- 5 085 655
- US-A1- 2005 277 905
- US-A1- 2006 251 890
- US-A1- 2007 077 282
- US-A1- 2009 320 324
- US-A1- 2016 272 856
- US-A1- 2018 178 584

## Description

### Technical Field

The present disclosure relates generally to
a multilayer packaging material comprising a cohesive article comprising a cohesive portion including a cohesive composition.

### Background

Cohesive coatings, also referred to as cold seal adhesives, are a type of pressure sensitive adhesive which possesses the ability to form a strong bond to itself, but not substantially to other surfaces, when pressure is applied. In some embodiments, cohesive coatings are thus pressure respondent, *i.e.* the introduction of mechanical energy is all that is required to initiate seal formation. Because of these advantageous properties, cohesives coatings are used in a variety of different types of applications. WO 2018/022495 A1 discloses multilayer films and adhesive tapes that include such films, wherein the multilayer films include plasticized polyvinyl chloride and optionally one or more fillers. US 2007/0077282 A1 discloses an adhesive patch for external use on skin. US 2006/ 0251890 A1 discloses pressure sensitive adhesive laminates. US 2018/0178584 A1 discloses tyres provided with a tread comprising a diene elastomer and a thermoplastic elastomer system. US 2005/0277905 A1 discloses diapers, diaper fasteners, and diaper landing areas. US 2016/0272856 A1 discloses low application temperature hot melt adhesive compositions. US 5,085,655 discloses polymeric materials useful in mounting systems and tapes for joining elements. US 2009/0320324 A1 discloses a cushioning device.

### Summary

The present invention is as described in the appended claims.

The inventors of the present disclosure recognized that cohesive coatings are made by solvent coating, which is an expensive and/or environmentally unfriendly manufacturing process. The inventors of the present disclosure thus sought to create a cohesive composition that could be extruded. To that end, the inventors of the present disclosure have discovered a cohesive formulation that can be extruded.

The inventors of the present disclosure also recognized that it is difficult and expensive to laminate or coat a cohesive coating onto a film or article, because cohesive coatings do not adhere to materials other than themselves. The inventors of the present disclosure also recognized that an extrudable cohesive that could be co-extruded with another extrudable material, such as a backing or core, could create a cohesive-coated material without the need for difficult or expensive procedures, such as surface modification of the coated material, to laminate the cohesive coating to the other backing or core.

The cohesive compositions can be coated onto or applied to at least a portion of a backing or core. In the present invention, the cohesive compositions are used in packaging materials. The cohesive compositions can be used in fastening systems for absorbent articles.

In the present invention, the cohesive composition comprises 30 to 70 wt% rubber; 10 to 50 wt% thermoplastic elastomer; and 10 to 45 wt% filler; wherein the wt% is based on the total weight of rubber + thermoplastic elastomer + filler.

In some embodiments, the cohesive composition is extrudable and/or capable of being blown as a film. In some embodiments, the cohesive composition comprises between 35 wt% and 65 wt% rubber. In some embodiments, the rubber includes at least one of natural rubber, synthetic rubber, and mixtures thereof. In some embodiments, the synthetic rubber is at least one of polyisoprene rubber, polybutadiene rubber, styrene-butadiene rubber (SBR), polychloroprene rubber, nitrile rubber, and mixtures thereof. In some embodiments, the synthetic rubber is 1,4 cis polyisoprene. In some embodiments, the cohesive composition comprises 15 wt% to 45 wt% thermoplastic elastomer. In some embodiments, the thermoplastic elastomer includes at least one of styrene-isoprene-styrene, styrene-isoprene/butadiene-styrene, styrene-butadiene-styrene, styrene-ethylene/butylene-styrene, styrene-ethylene/propylene-styrene, and mixtures thereof. In some embodiments, the thermoplastic elastomer has a total content of overall styrene units of between 10 wt% and 50 wt% based on total weight of the thermoplastic elastomer. In some embodiments, the thermoplastic elastomer includes at least one of styrene-isoprene, styrene butadiene isoprene, styrene isoprene butadiene, styrene-butadiene, styrene-ethylene/butadiene, styrene-ethylene-propylene, and mixtures thereof. In some embodiments, the weight percent of the diblock copolymer in the thermoplastic elastomer is less than 40 wt% based on the total weight of the thermoplastic elastomer. In some embodiments, the thermoplastic elastomer is non-tacky at an ambient temperature of about 25° C and has a storage modulus at 25° C of greater than 3x10⁵ Pa when measured at a frequency of about 1 Hz by a Dynamic Mechanic Rheometer. In some embodiments, the filler includes at least one of expanded perlite, microspheres, expandable microspheres, ceramic spheres, zeolites, clay fillers, glass beads, silica type fillers, fumed silica, fibers, nanoparticles, talc, calcium carbonate, aluminum silicates, titanium dioxide and silicon dioxide, diatomaceous earth, wax, such as polyethylene wax, and any combinations thereof. In some embodiments, the cohesive composition includes less than 20 wt% of tackifier and/or plasticizer content based on the total weight of rubber and thermoplastic elastomer in the cohesive composition. In some embodiments, the cohesive composition further comprises 0.1 to 10 parts UV and/or heat stabilizer per 100 parts total rubber and thermoplastic elastomer. In some embodiments, the UV and/or heat stabilizers include at least one of amines, phenolics, dithiocarbamates, Tinuvian stabilizers, and UV absorbers.

The multilayer packaging material of the present invention comprises a cohesive article comprising a cohesive portion including a cohesive composition as described herein; and a backing portion adjacent to the cohesive portion; a cushioning layer; and an outer layer.

Some embodiments further include a tie layer between the cohesive portion and the portion. Some embodiments further include a seal layer. In some embodiments, the backing portion includes at least one of a plastic, a nonwoven, a paper, a metal foil, a foam, and mixtures thereof. In some embodiments, the plastic includes at least one of polypropylene, uniaxially or biaxially oriented polypropylene, vinyl, polyolefin, polyethylene, polyurethanes, polyurethane acrylate, polyester, polyethylene terephthalate, and mixtures thereof. In some embodiments, the tie layer includes a thermoplastic elastomer. In some embodiments, the thermoplastic elastomer includes at least one of a triblock copolymer consisting of styrene-isoprene-styrene (SIS), styrene-isoprene/butadiene-styrene (SIBS), styrene-butadiene-styrene (SBS), styrene-ethylene/butylene-styrene (SEBS), and styrene-ethylene/propylene-styrene (SEPS) and diblock copolymer consisting of styrene-isoprene, styrene butadiene isoprene, styrene isoprene butadiene, styrene-butadiene, styrene-ethylene/butadiene, and styrene-ethylene-propylene, and mixtures thereof. In some embodiments, the seal layer includes at least one of polyethylene, a polyolefin, a polyolefin copolymer, a thermoplastic elastomer, and mixtures thereof. In some embodiments, the layers are coextruded. In some embodiments, at least some of the layers are multilayer. In some embodiments, the adhesion to the adherend surface is less than 200 grams/inch when measured according to PSTC-101; Method A. In some embodiments, the T-peel is greater than 400 grams/inch when measured according to ASTM D1876.

In some embodiments, the cushioning layer includes at least one of bubble wrap or foam. In some embodiments, the outer layer is at least one of paper, plastic, and/or nonwoven. In some embodiments, the outer layer is at least one of single-ply, double-ply, or triple-ply. In some embodiments, the packaging material passes the shipping test/pop open as articulated herein.

Disclosed herein is a fastening system for absorbent articles, comprising cohesive films consistent with the present disclosure. The fastening system may include a first fastening element comprising a substrate and a first cohesive film, and a second fastening element, comprising a substrate and a second cohesive film. Upon closure of an article to which the fastening system is adhered to, the first cohesive film and the second cohesive film self-mate, that is, are co-adherent and releasably engage.

Also disclosed herein is a method of making a cohesive article, comprising: obtaining a cohesive composition consistent with the teachings herein; and placing the cohesive composition adjacent to a backing. In the method, placing the cohesive composition adjacent to the backing may comprise extruding or co-extruding the cohesive composition and the backing. The method may further involve placing a tie layer or portion between the cohesive composition and the backing. In the method, placing the tie layer or portion between the cohesive composition and the backing may comprise coextruding the tie layer with the cohesive composition and the backing. The method may further involve placing a seal layer adjacent to the backing. In the method, placing the seal layer adjacent to the backing may comprise coextruding the seal layer with the cohesive composition and the backing.

### Brief Description of Drawings

Fig. 1 is a cross-sectional side view of an exemplary cohesive article in accordance with the teachings herein.
Fig. 2 is a cross-sectional side view of an exemplary cohesive article in accordance with the teachings herein.
Fig. 3 is a cross-sectional side view of an exemplary cohesive article in accordance with the teachings herein.
Fig. 4 is a cross-sectional side view of an exemplary cohesive article in accordance with the teachings herein.
Fig. 5 is a cross-sectional schematic side view of an exemplary cohesive article included in an exemplary packaging material.
Fig. 6 is a schematic perspective view of the exemplary packaging material of Fig. 5 in use.
Fig. 7 is a schematic perspective view of the exemplary packaging material of Fig. 5 in its final state, wrapped around an item to be shipped following the use process shown in Fig. 6.
Fig. 8 is a schematic perspective view of the exemplary packaging material of Fig. 5 in use.
Fig. 9 is a schematic perspective view of the exemplary packaging material of Fig. 5 in its final state, wrapped around an item to be shipped following the use process shown in Fig. 8.
Fig. 10 is an isometric view of an exemplary absorbent article including a fastening system.
Fig. 11 is an isometric view of the absorbent article of Fig. 10 in a closed configuration.

### Detailed Description

While the present invention relates to the multilayer packaging material defined in the claims, the present disclosure relates generally to cohesive compositions, articles including a cohesive composition, and methods of making such compositions and articles. As used herein, the term "cohesive" means an adhesive that adheres to itself and not substantially to other materials. In some embodiments, the cohesive composition is non-tacky to the touch at ambient temperatures. In some embodiments, cohesive compositions and/or articles have a tack of less than 30 grams when measured by a TA-XT2i Texture Analyzer according ASTM D-2979. In some embodiments, the tack (when measured as described above) is less than 20 grams, or less than 10 grams.

In some embodiments, the coehsive compositions used in the present invention have less than 20 wt% tackifier, plasticizer, and/or mixtures thereof based on the total weight of the cohesive composition. In some embodiments, cohesive compositions have less than 15 wt%, or less than 10 wt%, or less than 5 wt% tackifier, plasticizer, and/or mixtures thereof based on the total weight of the cohesive composition.

In some embodiments, the cohesive composition, layer, or material is co-adherent to itself while being able to contact other surfaces without sticking, damaging, or leaving a residue which would otherwise mar the surface or damage the other surfaces. In some embodiments, the cohesive will remove cleanly from an adjacent article (*i.e.,* without damaging the article) while adhering sufficiently strongly to itself and/or to another cohesive surface so as to create a strong bond that is sufficient to stay adhered or bonded in the desired configuration or orientation during use. In some embodiments, the cohesive is capable of being cleanly removed from an article to which it has been exposed, meaning that it does not damage and/or leave significant residue on the article when it is removed from the article.

### Cohesive Compositions

In some embodiments, the cohesive compositions used in the present invention include rubber, thermoplastic elastomer, filler, UV and/or
heat stabilizers. In some embodiments, the cohesive composition includes between 30-90 wt% rubber; 10-70 wt% thermoplastic elastomer; and 10-100 parts filler per 100 parts total rubber + thermoplastic elastomer. In some embodiments, the cohesive composition also includes 0.1 - 10 parts UV and/ or heat stabilizer per 100 parts total rubber + thermoplastic elastomer.

Rubber: Rubbers capable of use in the cohesive compositions include synthetic rubber, natural rubber, and/or mixtures thereof. In some embodiments, synthetic rubber is preferred over natural rubber because of the growing incidence of latex allergies (allergic reactions to the proteins present in natural rubber latex). Exemplary synthetic rubbers include, for example, polyisoprene rubber (including, for example, 1,4 cis polyisoprene), polybutadiene rubber, styrene-butadiene rubber (SBR), polychloroprene rubber, nitrile rubber, and mixture thereof. Some commercially available polyisoprene rubbers include, for example, Nipol^{®} IR 2200 and 2200L, both sold by Zeon Corporation, Cariflex^{®} IR 307 and Cariflex^{®} IR 310, both sold by Kraton Corporation.

The cohesive composition used in the present invention includes between 30-70 wt% rubber. In some embodiments, the cohesive composition includes between 35-65 wt% rubber. In some embodiments, the cohesive composition includes at least 30 wt%, or 35 wt%, or 40 wt%, or 45 wt%, or 50 wt% rubber. In some embodiments, the cohesive composition includes less than 70 wt%, or 65 wt%, or 60 wt%, or 55 wt% rubber.

### Thermoplastic Elastomer:

In general, thermoplastic elastomers (TPE) are plastics that exhibit the properties of vulcanized elastomers (rubber) at room temperature, but can be processed like thermoplastic plastics when heated. TPEs of the present disclosure are block copolymers. In some embodiments, TPEs can be melted, repeatedly deformed, and recycled. Thermoplastic elastomers show advantages typical of both rubbery materials and plastic materials. One exemplary benefit of thermoplastic elastomers is the ability to stretch to moderate elongations and return to its near original shape. In some embodiments, this allows the composition and/or article to have a longer life and/or better physical range than materials lacking a thermoplastic elastomer.

The cohesive composition used in the present invention includes between 10-50 wt% thermoplastic elastomer. In some embodiments, the cohesive composition includes between 15-45 wt% thermoplastic elastomer. In some embodiments, the cohesive composition includes between 20-40 wt% thermoplastic elastomer. In some embodiments, the cohesive composition includes at least 10 wt%, or at least 15 wt%, or at least 20 wt%, or at least 25 wt% thermoplastic elastomer. In some embodiments, the cohesive composition includes less than 50 wt%, or less than 45 wt%, or less than 40 wt%, or less than 35 wt% thermoplastic elastomer.

Exemplary thermoplastic elastomers that can be included in the cohesive compositions of the present disclosure include, for example, styrenic triblock copolymers, thermoplastic polyolefin elastomers, thermoplastic polyurethanes, thermoplastic copolyesters, thermoplastic polyamides, and mixtures thereof. In some embodiments, the thermoplastic elastomer includes at least one triblock copolymer consisting of styrene-isoprene-styrene (SIS), styrene-isoprene/butadiene-styrene (SIBS), styrene-butadiene-styrene (SBS), styrene-ethylene/butylene-styrene (SEBS), and styrene-ethylene/propylene-styrene (SEPS).

In some embodiments, the total content of overall styrene units in the thermoplastic elastomer is 5% to 50%, or 10% to 50%, or 20% to 45% based on total weight of the thermoplastic elastomer. In some embodiments, the total content of overall styrene units in the thermoplastic elastomer is greater than 5%, or 10%, or 15%, or 20% based on total weight of the thermoplastic elastomer. In some embodiments, the total content of overall styrene units in the thermoplastic elastomer is less than 50%, or less than 45% based on total weight of the thermoplastic elastomer.

In some embodiments, the TPE includes an isoprene block. In some embodiments, the isoprene block is a hydrogenated isoprene. In some embodiments, the isoprene block is a polymodal asymmetric multi-arms block.

In some embodiments, the thermoplastic elastomer includes a diblock copolymer. Some exemplary diblock copolymers for inclusion in the cohesive composition of the present disclosure include, for example, styrene-isoprene, styrene butadiene isoprene (SBI), styrene isoprene butadiene (SIB), styrene-butadiene, styrene-ethylene/butadiene (SEB), and/or styrene-ethylene-propylene (SEP). In some embodiments where the thermoplastic elastomer contains a diblock copolymer, the weight percent of the diblock copolymer in the thermoplastic elastomer is less than 40%, or less than 20%, or less than 10% based on the total weight of the triblock and diblock copolymer mixtures. This amount allows the cohesive composition to maintain low tack and/or good bonding strength.

One exemplary preferred thermoplastic elastomer is a triblock copolymer of styrene-isoprene-styrene (SIS) copolymer. In some embodiments, the triblock copolymer of styrene-isoprene-styrene (SIS) copolymer has a total styrene content of between 20% and 45%. Some exemplary commercially available triblock SIS that can be used in the cohesive compositions described herein is Vector 4411A or 4215A, both sold by TSRC Corporation. Other commercially available triblock SISs that can be used in the cohesive compositions described herein include Hybrar^{™} 5125 and 7125 sold by Kuraray Corporation, Kraton 1340, 1114, and 1164P sold by Kraton Corporation, and Quintac 3460 sold by Zeon Corporation.

In some embodiments, the thermoplastic elastomer is non-tacky at an ambient temperature of about 25° C and has G' (storage modulus) at 25° C of greater than 3x10⁵ P when measured at a frequency of about 1 Hz by a Dynamic Mechanic Rheometer. (i.e. above the Dahlquist Criterion for tack defined in Adhesion and Adhesives Technology An Introduction by Alphonsus V. Pocius, page 231).

### Filler:

In some embodiments, filler is used to reduce tack and adhesion of the cohesive composition. Any filler material commonly known to those skilled in the art may be used in the cohesive compositions of the present disclosure. Some exemplary filler materials that can be used in the cohesive compositions of the present disclosure include, for example, expanded perlite, microspheres, expandable microspheres, ceramic spheres, zeolites, clay fillers, glass beads, silica type fillers (including hydrophobic silica type fillers and hydrophilic silica type fillers, and/or fumed silica), fibers (including glass fibers, carbon fibers, graphite fibers, silica fibers, and/or ceramic fibers), nanoparticles, talc, calcium carbonate, aluminum silicates, titanium dioxide, silicon dioxide, diatomaceous earth, wax (such as polyethylene wax), and any combinations thereof.

The total filler content in the cohesive composition is 10 wt% to 45 wt%. In some embodiments, the total filler content in the cohesive composition is 12 wt% to 40 wt%. In some embodiments, the total filler content in the cohesive composition is 17 wt% to 35 wt%. In some embodiments, the total filler content in the cohesive composition is greater than 10 wt% or 11 wt%, or 12 wt%, or 13 wt%, or 14 wt%, or 15 wt%, or 15 wt%, or 17 wt%, or 18 wt%, or 19 wt%, or 20 wt%. In some embodiments, the total filler content is less than 45 wt%, or 42 wt%, or 40 wt%, or 37 wt%, or 35 wt%.

In some embodiments, the total filler content in the cohesive composition is 10 to 100 PHR (parts per 100 parts of the total weight of rubber and thermoplastic elastomer). In some embodiments, the total filler content in the cohesive composition is 15 to 75 PHR. In some embodiments, the total filler content in the cohesive composition is 15 - 60 PHR. In some embodiments, the total filler content in the cohesive composition is greater than 10 PHR, or 15 PHR, or 20 PHR. If the filler loading is less than 10 PHR, tack and adhesion of the cohesive composition might be too high. If the filler loading is greater than 100 PHR, the self-adhesion strength of the cohesive composition may be reduced.

In some embodiments, the filler has an average particle size of sub-micrometer to 100 µm. In some embodiments, the filler has an average particle size of 1 µm to 50 µm. In some embodiments, the filler has an average particle size of 3µm to 25 µm. In some embodiments, the filler particle size is greater than the cohesive coating thickness, which can impart surface roughness as well as / or reduce contact area and/or tack of the cohesive coating.

### UV and Heat Stabilizers:

Any UV and/or heat stabilizers may be used in the cohesive compositions of the present disclosure. Antioxidants can retard the oxidative attack on natural rubber and synthetic rubbers, which can result in loss of the cohesive strength of the rubber based cohesives. Useful antioxidants include but are not limited to amines, such as N-N' di- β -naphthyl-1,4-phenylenediamine, available as AgeRite D; phenolics, such as 2,5-di-(t-amyl) hydroquinone, available as Santovar A^{™}, available from Monsanto Chemical Co., tetrakis[methylene 3-(3', 5'-di-tert-butyl-4'-hydroxypheny)propionate]methane, available as IRGANOX^{™} 1010 from Ciba-Geigy Corp., and 2-2'-methylenebis(4-methyl-6-tert butyl phenol), available as Antioxidant 2246; and dithiocarbamates, such as zinc dithiodibutyl carbamate, Octadecyl-3-(3,5-di-tert.butyl-4-hydroxyphenyl)-propionate available as IRGANOX^{™} 1076 from Ciba-Geigy Corp., Didodecyl 3,3'-thiodipropionate available as Arenox DL, Dilauryl Thiodipropionate available as BNX^{®} DLTDP from Mayzo, Inc., Tinuvin stabilizers & UV absorbers such as Tinuvin 900, 1130, 400, 405, 144, 783, and 292.

### Other Additives:

Tackifier resins and plasticizers can be used in the cohesive composition as long as tack of the resulting cohesive composition is < 30 grams, more preferred < 20 grams, most preferred < 10 grams. Exemplary tackifier resins include aliphatic and aromatic hydrocarbon resins, polyterpene, and hydrogenated resins. Exemplary commercially available tackifier resins include Wingtack Plus, and Wingtack 95, available from the Cray Valley, Piccolyte HM-85, HM-105, and S-115 available from Hercules, Inc., Escorez 5380, Escorez 5300, available from Exxon Chemical Co., Regalrez 1094, and Regalrez 1126, available from Hercules Inc.; and Arkon P-90, Arkon P-100, available from Arakawa Chemical Co.

Plasticizers may be used in the cohesive compositions of the present disclosure. Exemplary plasticizers include naphthenic oils such as "Shellflex" 371, available from Shell Chemical Co., paraffinic oils, aromatic oils, and mineral oils such as "Kaydol" oil, available from Witco Chemical Corp.

### Properties/Advantages of the Cohesive Compositions:

The cohesive compositions described herein have various advantages over existing cohesive compositions. In some embodiments, the cohesive compositions used in the present invention are extrudable and/or coextrudable. As described herein, this presents various advantages including reduced manufacturing cost and an enhanced sustainability and environmental friendliness. Further, some embodiments of the cohesive compositions do not include natural rubber, limiting their risk of causing an undesirable allergic reaction in the user. In some embodiments, the cohesive compositions (once placed on a backing or core) exhibit strong resistance to the package pop open test.

### Cohesive Films:

The present disclosure also relates to cohesive films including any of the cohesive compositions described above. Such cohesive films may include any of the cohesive compositions described herein adjacent to a backing or core layer. In the cohesive films, a tie layer may be between the backing and the cohesive composition. In the cohesive films, an additional seal layer may be adjacent to the side of the backing opposite the cohesive composition. The films may be rollable and/or can be in roll good form. The carrier or core layer may be a layer meant to carry the cohesive layer so that it can be applied in another location. In this case, the carrier or core layer acts as a release layer whose purpose is to facilitate transfer of the cohesive composition. Some exemplary cohesive articles are shown in the following figures.

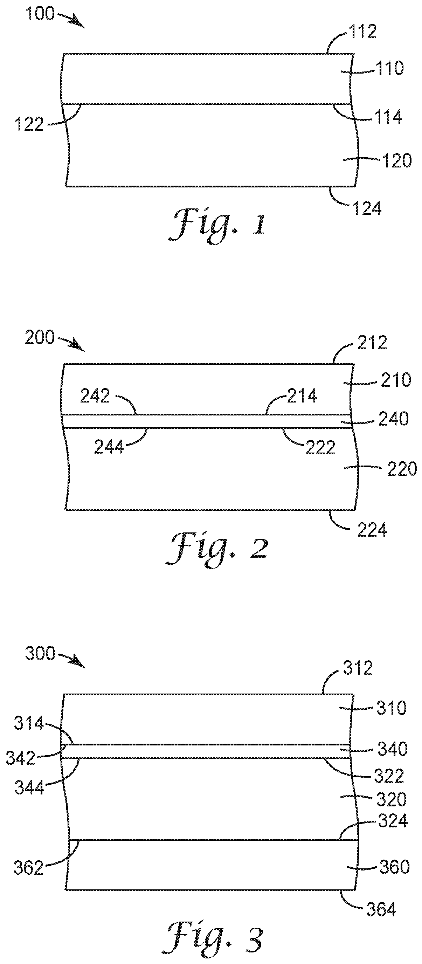

**Fig. 1** is a cross-sectional side view of a cohesive article 100 including a cohesive portion or layer 110 (having a first major surface 112 and a second major surface 114) adjacent to a backing or core portion or layer 120 (having a first major surface 122 and a second major surface 124). In the cohesive films backing or core portion or layer 120 may provide support for the cohesive composition. In the cohesive films,backing or core portion or layer 120 may provide strenght and structure for ease in manufacturing, shipping, and use - for example, during unwind and web transport processes. In the cohesive films backing or core portion of layer 120 may enhance the cohesive composition's ability to resist deformation during thermal lamination. In the cohesive films, one or more of the layers or portions (including cohesive layer 110 and backing layer 120) can have a single or multilayer construction. More information about each of the layers or portions is below.

**Fig.** 2 is a cross-sectional side view of a cohesive article 200 including a cohesive portion or layer 210 (having a first major surface 212 and a second major surface 214) adjacent to a tie portion or layer 240 (having a first major surface 242 and a second major surface 244) which is adjacent to a backing or core portion or layer 220 (having a first major surface 222 and a second major surface 224). Tie layer or portion 240 enhances T-peel performance of the cohesive article and/or improves the strength of the bond between cohesive layer 210 and backing 220. In the cohesive films, one or more of the layers or portions (including cohesive layer 210, backing layer 220, and/or tie layer 240) can have a single or multilayer construction. More information about each of the layers or portions is below.

**Fig. 3** is a cross-sectional side view of a cohesive article 300 including the following layers or portions: (1) a cohesive portion or layer 310 (having a first major surface 312 and a second major surface 314) adjacent to (2) a tie portion or layer 340 (having a first major surface 342 and a second major surface 344) which is adjacent to (3) a backing or core portion or layer 320 (having a first major surface 322 and a second major surface 324) which is adjacent to (4) a seal layer 360 (having a first major surface 362 and a second major surface 364). Seal layer 360 may be a heat or thermal seal layer. Typically, a heat or thermal seal layer results from two sealing surfaces being heated and immediately placed in intimate contact under a given pressure and for a specified amount of time and allowed to cool, which forms a bond between the two layers. The thermal seal layer may permit rapid thermal fusion of the cohesive article to another article. Seal layer 360 may provide anti-block functionality during unwinding of a roll or jumbo of the cohesive article.

Seal layer 360 may be referred to as a skin. Seal layer 360 may be printable using techniques known by those in the field. One or more of the layers or portions (including cohesive layer 210, backing layer 220, and/or tie layer 240) can have a single or multilayer construction. More information about each of the layers or portions is below.

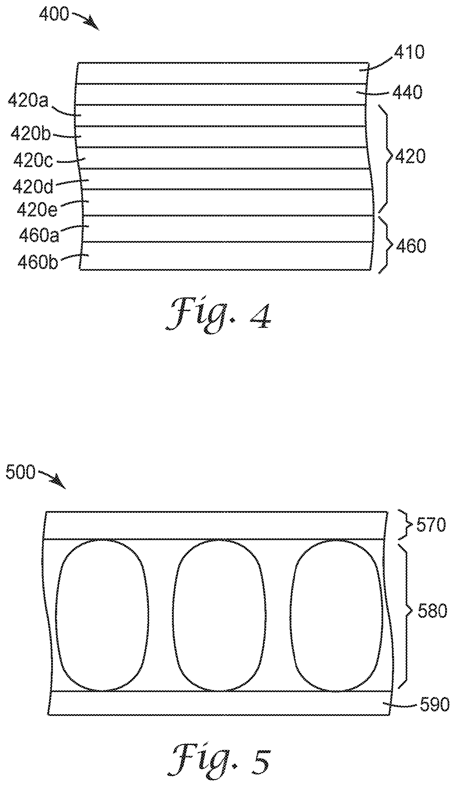

**Fig. 4** is a cross-sectional side view of a cohesive article 400 including all of the layers or portions of cohesive article 300 shown in Fig. 3 except that at least some of those layers are multilayer. Specifically, cohesive portion or layer 410 is a single layer in this example (but can be multilayer). Tie layer or portion 440 is shown as a single layer in this example (but can be multilayer). Backing or core layer 420 is shown as being a five-layer multilayer in this example. Those of skill in the art will appreciate that backing or core layer 420 can be any desired number of layers including, for example, 1, 2, 3, 4, 5, 6, 7, etc. Seal layer 460 is shown as being a two-layer multilayer in this example. Those of skill in the art will appreciate that seal layer 460 can be any desired number of layers including, for example, 1, 2, 3, 4, 5, 6, 7, etc. In this example the entire cohesive article is a 9-layer multilayer construction. However, those of skill in the art will appreciate that the entire construction (meaning the cohesive film and/or the cohesive article) can be any desired number of layers including, for example, 2, 3, 4, 5, 6, 7, 8, 9, 10, 11, 12 etc.

Additional information about the portions or layers described above is as follows. For purposes of clarity, thicknesses of the multilayer film, and ratio of layer thickness of the one or more additional layers, will depend on the targeted end use for a multilayer construction.

### Cohesive Composition Laver or Portion

Any cohesive composition described herein can be used in any of the cohesive articles described herein.

In some embodiments, the cohesive composition layer or portion has a thickness of between 5 microns and 100 microns, or between 10 microns and 50 microns. In some embodiments, the cohesive composition layer or portion has a thickness of greater than 5 microns, or 10 microns, or 25 microns. In some embodiments, the cohesive composition layer or portion has a thickness of less than 100 microns, or 75 microns, or 50 microns, or 25 microns. In some embodiments, the thickness of the cohesive layer is smaller than the particle size of the filler.

### Tie Layer or Portion

The tie layer enhances T-peel performance of the cohesive article and/or improves bonding strength between the backing and the cohesive composition. Any desired tie layer that enhances the T-peel performance of the cohesive article and/or the bond between the cohesive composition and the backing or core layer can be used. In some embodiments, the tie layer or portion is a thermoplastic elastomer having a storage modulus (G') less than the storage modulus of the cohesive composition at an ambient temperature of 25°C when measured at a frequency of about 1 Hz by a Dynamic Mechanic Rheometer. In some embodiments, the tie layer includes a primer. In some embodiments, the tie layer improves viscoelastic deformation and/or absorbs energy from the system.

Some exemplary thermoplastic elastomers that can be used include, for example, blends of triblock copolymer (for example, styrene-isoprene-styrene (SIS), styrene-isoprene/butadiene-styrene (SIBS), styrene-butadiene-styrene (SBS), styrene-ethylene/butylene-styrene (SEBS), and styrene-ethylene/propylene-styrene (SEPS)) and diblock copolymer (for example, styrene-isoprene, styrene butadiene isoprene, styrene isoprene butadiene, styrene-butadiene, styrene-ethylene/butadiene, and styrene-ethylene-propylene).

In some embodiments, the weight percent of diblock copolymer in the tie layer or portion is between 20 wt% and 85 wt% based on the total weight of the triblock and diblock copolymers in the tie layer or portion. In some embodiments, the weight percent of diblock copolymer in the tie layer or portion is between 30 wt% to 80 wt% based on the total weight of the triblock and diblock copolymers in the tie layer or portion. In some embodiments, the weight percent of diblock copolymer in the tie layer or portion is between 40 wt% to 80 wt% based on total weight of the triblock and diblock copolymers in the tie layer or portion. In some embodiments, the weight percent of diblock copolymer in the tie layer or portion is greater than 20 wt%, or greater than 30 wt%, or greater than 40 wt% based on the total weight of the triblock and diblock copolymers in the tie layer or portion. In some embodiments, the weight percent of diblock copolymer in the tie layer or portion is less than 85 wt%, or less than 80 wt%, or less than 70 wt% based on the total weight of the triblock and diblock copolymers in the tie layer or portion

In some embodiments, the total content of styrene units of the tie layer or portion is 5 wt% to 30 wt% based on total weight of the triblock and diblock copolymer in the tie layer or portion. In some embodiments, the total content of styrene units of the tie layer or portion is 5 wt% to 25% wt% based on total weight of the triblock and diblock copolymer in the tie layer or portion. In some embodiments, the total content of styrene units of the tie layer or portion is 5 wt% to 20 wt% based on total weight of the triblock and diblock copolymer in the tie layer or portion. In some embodiments, the total content of styrene units of the tie layer or portion is greater than 5 wt%, or 6 wt%, or 7 wt%, or 8 wt%, or 9 wt%, or 10 wt% based on total weight of the triblock and diblock copolymer in the tie layer or portion. In some embodiments, the total content of styrene units of the tie layer or portion is less than 30 wt%, or 25 wt%, or 20 wt%, or 15 wt% based on total weight of the triblock and diblock copolymer in the tie layer or portion. In some embodiments, the thermoplastic elastomer is a blend of triblock copolymer of styrene-isoprene-styrene (SIS) copolymer and a diblock of styrene-isoprene copolymer where the total styrene content is between 5 wt% and 25 wt%. In some embodiments, the thermoplastic elastomer is a triblock copolymer of styrene-isoprene-styrene (SIS) copolymer where the total styrene content is between 5 wt% and 25 wt%.

Some exemplary commercially available tie layers include Kraton^{™} D 1119 and D1161, both sold by Kraton Corporation and Vector 4186 and 4187, both sold by Dexco Corporation.

In some embodiments, the tie layer or portion has a thickness of between 5 microns and 50 microns, or between 15 microns and 25 microns. In some embodiments, the tie layer or portion has a thickness of greater than 5 microns, or 10 microns, or 15 microns, or 20 microns, or 25 microns. In some embodiments, the tie layer or portion has a thickness of less than 50 microns, or 40 microns, or 30 microns, or 25 microns.

It should be noted that the tie layer or portion is not required, and thus in some embodiments a tie layer or portion will not be used. Surprisingly is not necessary to use a tie layer or portion to laminate the cohesive composition layer or portion to the core or backing layer or portion because the cohesive layer or portion will laminate to the backing or core layer or portion when, for example, they are coextruded. This is particularly surprising when the backing or core layer or portion is polyethylene,

For some applications, such as those where it is desirable for the bond between two cohesive layers or portions to be more easily de-bonded, a lower T-peel performance may be desired. In such applications, it can be beneficial to omit the tie layer or portion. It may be beneficial to omit the tie layer or portion in other applications as well. In other applications an increased T-peel performance is desirable and in such applications the tie layer or portion can be desirably included. When a tie layer is used, the selection of a tie layer will depend on the required T-peel performance of the final product and on the identity of the core or backing layer or portion.

Because, for example, the tie layer or portion is not needed to laminate the cohesive composition layer or portion to the backing or core layer or portion, in some embodiments the tie layer or portion does not contain a tackifier. In some embodiments, the tie layer or portion is not a pressure sensitive adhesive (PSA).

### Core or Backing Layer or Portion

Any known backing or core layer, portion, or material may be used. Some exemplary suitable backing or core layers include plastics (*e.g*., polypropylene (including biaxially oriented polypropylene) vinyl, polyolefin (such as polyethylene), polyurethanes, polyurethane acrylates, polyesters (such as polyethylene terephthalate), nonwovens (*e.g.,* paper, cloth, nonwoven scrim), metal foils, foams (*e.g.,* polyacrylic, polyethylene, polyurethane, neoprene), and the like.

In some embodiments, the core or backing layer or portion has a thickness of between 0.5 mils and 10 mils, or between 0.75 mils and 5 mils. In some embodiments, the core or backing layer or portion has a thickness of greater than 0.5 mils, or 0.75 mils, or 1.0 mil. In some embodiments, the core or backing layer or portion has a thickness of less than 10 mils, or 5 mils, or 1 mil.

### Seal or Skin Layer or Portion

Some embodiments include a seal or skin layer or portion. In some embodiments, the seal or skin layer or portion is a thermal seal layer. Thermal seal layers include, for example, heat seal layers and/or ultrasonic seal layers. The seal or skin layer can be a single layer or multilayer. The seal layer can be and/or can include a transfer adhesive.

In some embodiments, the seal or skin layer includes polyethylene (HDPE, LDPE, LLDPE, mLLDPE), polyolefins, polyolefin copolymers, thermoplastic elastomers. In some embodiments, the seal or skin layer includes at least one of the following commercially available components: Dowlex 2045 LLDPE sold by Dow Chemical, Marlex mLLDPE sold by Chevron Phillips Chemical, Dow Elite AT 6410 mLLDPE sold by Dow Chemical, Affinity 1850G sold by Down Chemical, and/or mixtures thereof. In some embodiments, the seal or skin layer further includes blends of the above LLDPE, mLLDPE, or polyethylene copolymer with an antiblocking agent or a release material such as, for example, Polyfil ABC 5000 and/or Ethylene bis stearamide (EBS).

In some embodiments, the seal or skin layer or portion has a thickness of between 0.2 mil and 3 mils, or between 0.4 mil and 1 mil. In some embodiments, the seal or skin layer or portion has a thickness of greater than 0.2 mil, or 0.3 mil, or 0.4 mil, or 0.5 mil, or 0.75 mil, or 1.0 mil. In some embodiments, the seal or skin layer or portion has a thickness of less than 3 mils, or 2 mils, or 1 mil.

### Methods of Making the Cohesive Films and/or Articles:

The cohesive compositions described herein can be extruded, solvent-coated, and/or blown into or onto a film. The extrusion, coextrusion, and blown film processes offer advantages in that they more environmentally friendly as compared to the solvent coating process for at least the reason that they do not require expensive or environmentally unfriendly solvent disposal. More information about each of these processes is below.

### Extrusion Processes:

Extrusion processes generally involves compounding (by, for example, calendering, roll milling, or twin screw) and extruding (by, for example, single, screw, twin screw, disk screw, reciprocating single screw, pin barrel single screw, etc.) material through a feedblock and/or die. Extrusion processing may be a substantially solvent and water-free process. The feedblock and/or die can contain one or more channels for material feedstock to flow.

The first step, compounding, can be done by, for example, commercially available equipment such as BRABENDER or BANBURY internal mixers, which batch mix the cohesive composition. After compounding, the cohesive may be extruded or coextruded with other feedstocks through a die into a desired cohesive film construction in a single step.

Coextrusion is a type of extrusion coating. Coextrusion typically involves the simultaneous melt processing of multiple molten streams and the combination of such molten streams into a single unified structure or coextruded film.

Blown film and cast extrusion processes are types of co-extrusion that are effected via a single extrusion die. Blown film processes generally result in a tube that is later collapsed. The tube may then be separated into two films (for example by slitting) or may result in a single film (for example if the inner most layer self bonds).

The extrusion processes all involve processing the one or more feedstocks at or above their melt temperature through the die(s), resulting in extrusion of the coextruded film. A coextruded or blown film is generally a composite of all the molten feedstocks placed within the co-extrusion process. In some embodiments, the co-extruded or blown films are multilayer. In some embodiments, at least some of the layers are in contact with one another in the molten state. In some embodiments, one or more of the layers are in contact throughout the extrusion (for example, one or more layers are in contact as soon as they are molten).

The coextruded film may further be processed, for example by orientation. One example of orientation of a film is biaxial orientation. Biaxial orientation involves stretching the film in two directions perpendicular to each other, generally in the down-web direction and cross-web direction. In a typical operation, the freshly extruded molten film is fed onto a chill roll to produce a quenched amorphous film which is briefly heated and stretched in the down-web direction, and then conducted through a tenter frame where it is stretched transversely with moderate heating. Down-web direction stretching may be accomplished by passing between two sets of nip rolls, the second set rotating at a higher speed than the first.

Adhesive articles have been manufactured with extrusion technology as shown, for example, in U.S. Pat. No. 5,660,922 (coextruding double sided adhesive tapes) and U.S. Pat. No. 6,777,053, both of which are incorporated by reference in their entirety. Some embodiments include release material blends to form a release film. See, for example, U.S. Patent Application 2004-0127121, which is incorporated by reference herein in its entirety.

Coextrusion processes and the use of co-extrudable compositions have many advantages. For example, coextrusion eliminates additional coating steps, resulting in a more cost-effective and efficient manufacturing process that reduces overall cost and/or time. Also, coextrusion processes can reduce the carbon footprint of the manufacturing line, being more sustainable and environmentally friendly. Further, coextrusion may eliminate the need for solvent and/or water, so the process eliminates the need for costly and environmentally disadvantageous solvent disposal.

In some embodiments, it may be desirable to apply the cohesive and/or tie layers or portions to less than the entire surface of the backing/core layer or portion. One exemplary method of making such a construction includes the use of a screen type roller or rotary screen printing device that selectively applies the cohesive coating upon only specific areas of the backing or core layer or portion. Alternatively, a spray head or series of spray heads may be used to selectively deposit a particular or random pattern of cohesive composition on the backing or core layer or portion. The pattern can be arranged to achieve a desired cohesive adhesion. In some embodiments, the cohesive material or layer is applied to substantially (e.g., at least 75% of the total surface area) of one major surface of the backing or core layer or portion. In some embodiments, the cohesive material or layer is applied to at least 80%, or at least 85%, or at least 90%, or at least 95%, or at least 97%, or at least 99% of the total surface area of one major surface of the backing or core layer or portion.

In some embodiments, it may be desirable to put at least some of the cohesive composition on both sides of the backing or core material or layer. In some embodiments, such constructions also include a tie layer on each side of the core or backing layer between the backing major surface and the cohesive layer or material. In some embodiments, at least one of the cohesive layers in these constructions is adjacent to a release liner.

In some embodiments, the cohesive article is or can be made in, for example, a roll or a flat sheet. In embodiments where the construction is made and/or stored as a roll or roll good, since the cohesive layer or material substantially only sticks to itself, when the cohesive film or article is rolled up, the cohesive coated surfaces do not make contact and no barriers are required to prevent the sheeting from sticking to itself while stored on the roll.

In some embodiments, the cohesive layer or material can be printed or visibly marked. In some embodiments, the cohesive film can be printed or visibly marked on one of the major surfaces of the seal layer. In some embodiments, the exposed major surface of the cohesive material or layer can be printed or visibly marked. Any known printing techniques can be used including, for example, (*e.g.,* flexographic, gravure, and/or screen printing). Any known ink or printing materials can be used. In some embodiments, the core or backing can be visibly marked or printed. In some embodiments, unique visual effects can be accomplished including, for example, antiblocking effects.

In some embodiments, direct printing on the cohesive material or layer can cause decreased performance of the cohesive film and/or article. For example, the printing can result in reduced bond strength between layers because the printing creates a barrier between the layers. In such instances, printing or visible marking can be effected by incorporating wavelength specific absorbing particles (e.g. titanium dioxide) in the cohesive material or layer. A laser can then be used to create the printing and/or visible mark without causing a change to the cohesive material. This prevents or reduced the incidence of poor seal bonding and cohesive bond failure.

Patents describing the above methods of printing or visible marking cohesive materials are described in, for example, U.S. Patent Nos. 9,132,506 and 8,771,919, both of which are incorporated herein in their entirety.

### Exemplary Uses for the Cohesive Composition and Cohesive Articles

The cohesive compositions and articles described herein can be used in any desired situation where a cohesive composition and/or cohesive article or film is needed. It may have especial applicability in situations where users will physically contact the cohesive during use since some embodiments of the cohesive composition do not include natural rubber and thus should not provoke a latex allergy.

The cohesive articles may be films and may be used in a packaging material or construction that can be used, for example, for shipping applications. This general type of construction is described in, for example, U.S. Patent Application No. 60/620031, the entirety of which is incorporated herein. One exemplary embodiment of such a product is shown in Fig. 5 wherein packaging 500 includes a cohesive film 570 (that is any of the cohesive article or films described herein) adjacent to a cushioning layer 580 that is adjacent to an outer layer 590.

The cohesive compositions and films and may be used in fastening systems. The fastening system may include a first fastening element comprising a substrate and a first cohesive film, and a second fastening element comprising a substrate and a second cohesive film. The first cohesive film and the second cohesive film may be identical in composition.
The composition of the first cohesive film may differ from the composition of the second cohesive film. In these fastening systems, the first cohesive composition will releasably adhere to the second cohesive composition when brought into contact.

In one example, the fastening systems are used in absorbent articles, such as, for example, diapers. Generally, such diaper fastening systems include an adhesive-based closure system, a mechanical-based closure system or a combination of both. Mechanical-based closure systems typically comprise hook-like fastening elements. Adhesive-based closure systems typically rely on pressure sensitive adhesives (PSAs) that are adhered to a landing zone on the diaper. One disadvantage of using pressure sensitive adhesive-based closure systems is that these PSAs, which are tacky at room temperature, may adhere to other parts of the absorbent article leading to improper closure or causing damage to the article. In contrast, fastening systems comprising cohesive compositions and films consistent with the present disclosure only adhere to themselves, thus eliminating the previously-mentioned undesirable effects.

The present application discloses an absorbent article including an absorbent layer and a fastening system. The absorbent layer may include a back sheet, a top sheet and an absorbent core therebetween, and the fastening system includes a first fastening element comprising a first cohesive film and a second fastening element comprising a second cohesive film.
The first fastening element may be disposed on or adjacent to a first portion of the absorbent layer, and the second fastening element is disposed on a second portion of the absorbent layer.
The first cohesive film, the second cohesive film, or both first and second cohesive films may be disposed on the absorbent layer. Either the first, second or both fastening elements may include a substrate to which the cohesive films are disposed on.

### Cushioning Layer

In some embodiments, cushioning layer 580 provides shock and/or impact resistance to prevent damage of the article or item being shipped. The cushioning layer can be any desired layer that provides cushioning to the item wrapped in the packaging material or construction described herein. In some embodiments, the cushioning layer can also provide one or more of structural integrity, shock absorption capability, flexibility, and/or interfacial function with other components of the shipper, etc. In some embodiments, it is desired that the cushioning layer have a relatively low profile to avoid excess shipping costs and/or undesirable bulk which would make packaging more complicated and/or storage more challenging.

In some embodiments, the cushioning layer is a single layer. In some embodiments, the cushioning layer includes multiple layers. In some embodiments, the cushioning layer is selected from materials that deform or crush to reduce resultant levels of shock and vibration upon enclosed articles, preferably below critical thresholds for damage for the articles. Illustrative examples of materials suitable for use in cushion members herein include such materials as foams layers (including expanded foams), bubble films or wraps, and structured polymers (e.g., honeycomb structures).

In some embodiments, the cushioning layer includes bubble wrap or bubble film. As used herein, the term "bubble film" is meant to include all pliable, plastic materials including spaced, protruding air-filled bubbles that are capable of providing cushioning. The term is meant to include those items referred to as bubble wrap, bubble pack, bubble paper, air bubble packing, bubble wrapping, and aeroplast. Some embodiments of a bubble films include a first thin flexible layer of plastic material having a plurality of spaced apart recesses in one surface and at least a second thin flexible layer of plastic material bonded to the one surface of the first layer to seal air into the recesses. The bubble film can include, for example, polyethylene as the plastic material for example, a linear low density polyethylene, a low density polyethylene and/or a high density polyethylene. However, other suitable plastics may also be used, such as, for example, polypropylene. Some commercially available bubble films include, for example, Scotch^{™} Cushion Wrap. The bubble film described in U.S. Patent Application Docket No. 80523US002, assigned to the present assignee can also be used, and this application is incorporated herein in its entirety.

In some embodiments, the cushioning layer includes foam. Exemplary foams can include, for example, polyethylene, polyester, acrylic, polyurethane, polypropylene, and/or styrene. In some embodiments, the foam is structured.

### Outer Layer

The outer layer can be any desired outer layer that provides at least some of the features described herein. In some embodiments, the outer layer is a single layer. In some embodiments, the outer layer includes multiple layers. As is described in greater detail below, in some embodiments, the outer layer is at least one of single-ply, double-ply, or triple-ply.

In embodiments where the outer layer is single ply, the outer layer material may be a heavy weight paper (such as, for example, kraft paper or the like), a plastic film (such as, for example, MYLAR^{™}), a nonwoven material (such as, for example, TYVEK^{™}), or a treated paper (such as, for example, aluminized paper).

In some embodiments, the outer layer includes a paper layer, which can be coated paper, Kraft paper, or higher quality paper such as Bond or white paper. In some embodiments, the paper may be printable and/or metallized to obtain a decorative packaging material. In some embodiments, the metallized paper layer may also be provided with graphics thereon.

In some embodiments, the outer layer includes a plastic. In some embodiments, the plastic is embossed, structured, or reinforced. In some embodiments, the plastic includes at least one of polypropylene, polyethylene, polyurethane, polyester, and/or a copolymer of any of these. In some embodiments, the polyethylene is at least one of a linear low density polyethylene, a low density polyethylene and/or a high density polyethylene. In some embodiments, the plastic is a thermoplastic and/or olefin material. The plastic may be uniaxially or biaxially oriented to impart high-strength thereto. A biaxial orientation may be preferred for greatest strength. One or more of the surfaces of the plastic layer may be corona discharge treated to render one or more of them receptive to inks and printing. Further, if a decorative package is desired, the plastic may be metallized as by vacuum deposition.

In some embodiments, the outer layer is a two-ply laminate. In some embodiments, the two-ply laminate is a paper/plastic laminate. In some such embodiments, a paper layer is laminated to a plastic film layer. Another exemplary two-ply outer layer is a laminate that includes a water impermeable plastic film having a first corona discharge treated surface that is adhesively cold laminated to a first paper layer.

In some such embodiments, the paper layer is cold laminated to the plastic layer. The cold lamination process enables the present packaging material to be manufactured at much higher speeds than when other adhesives, such as hot melt adhesives, are utilized, for example due to the additional time required for cooling of the hot melt adhesive before a secure bond is achieved. If hot melt adhesives were used instead of cold lamination for joining the plastic film to the paper, the heat of the adhesive could cause the film to shrink, thus causing a loss of strength. Also, the hot melt adhesive does not achieve its final bond strength until the adhesive cools, and the plastic film can shrink before this happens. Moreover, a wrinkled or curled product often results due to the difference in the high strength and low strength areas of the plastic film. The use of cold lamination is also advantageous when an uniaxially or biaxially-oriented plastic film is utilized. It is known that at elevated temperatures, such films relax and lose molecular orientation and strength. For example, when two sheets of biaxially-oriented polyester film are seamed together, using an ultrasonically-activated sealing bar to create internal friction and heat within the film, the films soften and fuse, with a resultant sealing line that is weak, such that the sheets then tend to tear along this line. Similar problems are encountered if an oriented film is exposed to high heat, such as if a hot melt adhesive would be used to join the film to the paper. Cold lamination utilizing a hot melt, solvent-based water-based, or transfer adhesive can produce a laminate that has high strength.

In some embodiments, the two-ply construction (or a portion thereof) is corona discharge treated. This treatment may be applied to the plastic immediately before the first corona discharge treated surface is adhesively laminated to the paper layer. This enables a strong bond to be achieved between the plastic and paper to form a paper-plastic film laminate having first and second opposed outer surfaces.

In some embodiments, the outer layer is three-ply. In some embodiments, the two-ply material(s) described above may further include an additional paper layer to form a paper-plastic-paper, three-ply laminate sheeting. The extra paper layer may be desirable for packaging objects with pointed edges or simply when a packaging material with more strength is desired. As the paper layers form the inner and outer sides of the packaging material, they can easily be printed with graphics or other indicia prior to application of the cushioning and/or cohesive material(s). This enables the packaging material to have one appearance on the outside of the package and another, different appearance on the side of the material that faces the item being shipped. When a three ply paper/plastic/paper laminate is used, the outermost portion of the outer layer can easily be printed using any one of a variety of well known techniques, including silk screening and the like. The innermost portion of the outer layer (e.g., the plastic film) provides moisture resistance to the article or item that is wrapped by the packaging material. Another exemplary outer layer is a three-ply laminate that includes a water impermeable plastic film having first and second corona discharge treated surfaces that are adhesively cold laminated to first and second paper layers. In some embodiments, the outer layer is more than three layers.

It may also be desirable that the packaging material have printable surfaces so that logos, messages, advertisements, emblems, trademarks or simply, addressee information etc., may be printed on the exterior or interior surfaces of the formed package. In this regard, the outer layer can include a printable surface. In some three-ply embodiments, the outer layer may include a second corona discharge treated surface to render it receptive to inks so that it may exhibit graphics.

The outer surface of the material should be able to be provided with indicia or other printed information. If the material itself is not receptive to such printed information, it can be treated to be receptive. For example, a plastic film of polyethylene that has the outer surface treated by a corona discharge can then be printed or provided with printed indicia. It is also possible, although less preferred, that the indicia be applied to the packaging material by an adhesive-backed sticker, label or the like.

In some embodiments, the outer layer has a thickness of greater than 0.5 mils. In some embodiments where the outer layer is paper, the outer layer has a thickness of greater than 3 mils.

In some embodiments, at least a portion, and in some instances, substantially the entire, outer layer is writable (e.g., can be written on with conventional writing instruments such as pens, pencils, and/or markers). In some embodiments, this can be achieved by selecting materials for the outer layer that inherently provide that characteristic. In some embodiments, this can be achieved by treating at least a portion of the surface of the selected outer layer to impart desired writability and/or adhesion (e.g., applying an adhesive-backed paper sheet or label). In some embodiments, imparting adhesion involves treating the inside of the outer layer, which will also aid in bonding of an adhesive and or cushion layer in a multi-layer construction. In some embodiments, this is achieved by incorporating a suitable skin on at least a selected portion of the shell.

In addition, if desired a decorative package is provided in an embodiment wherein the exterior surface of the packaging material is metallized or aluminized. If a silver finish is desired, an aluminized surface is preferred. Other metallizing treatments, e.g., with copper, iron, or alloys, can be used when other colors are desired.

In some embodiments, the outer layer is water impermeable.

In some embodiments, the outer layer is sufficiently tear and scuff resistant such that a wrapped article remains secure and protected during shipping and handling.

In some embodiments, the outer layer includes one or more materials providing at least one of insulation from thermal or acoustic shock and/or radiation protection.

### Methods of Use:

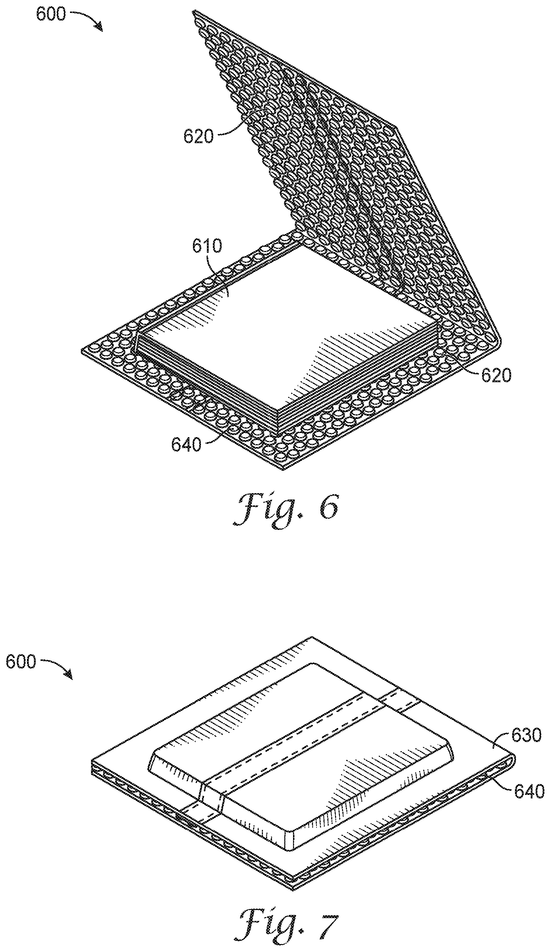

Use of the packaging material or construction is simple and intuitive. Where the packaging material is in the form of a roll or roll good, the user unrolls a portion of the material from the roll and cuts the desired portion to separate it or remove it from the roll. Where the packaging material is provided in a flat position, the material is simply cut to a desired length. The packaging material can then be placed on a flat surface with the outer surface down / on the flat surface and the cohesive layer upward / exposed to the user. As shown schematically in Fig. 6, the item or article to be shipped 610 is placed on the exposed cohesive surface 620 of the packaging material 600. The cohesive surface/material 620 does not stick to the goods because cohesive material only sticks to itself. In some embodiments, it may be preferred that the item or article 610 is placed in the center or middle of the packaging material 600. In some embodiments (as shown), it may be preferred that the item or article 610 is placed in the first or second half of the packaging material 600 cut.

As shown in Fig. 7, the packaging material 600 is then folded over and about the article or item to be shipped 610. In this step, the opposing cohesive layer or material coated surfaces 620 of the packaging material 600 come into contact with one another thereby enclosing the article or items to be shipped 610. Next, the user presses the packaging material 600 together to create a tight bond or seal between the cohesive layers 620 that are now closely or directly adjacent to one another. This step forms cohesive-cohesive bonds between the two adjacent cohesive layers 620, developing a bond to hold the packaging material or construction 600 in the desired configuration so as to function as a self-closing and/or custom fit shipper. In this way, a sealed package with protection but without excess material is created.

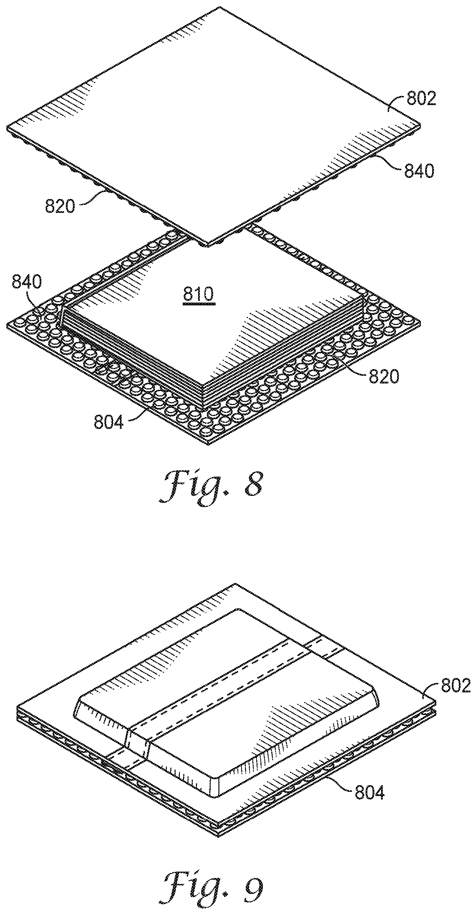

Alternatively, instead of packaging an article or item with one unitary sheet of packaging material, it may be desirable to use two separate sheets of packaging material, wherein at least a portion of each sheet has a layer of cohesive material. The two sheets of packaging material are each cut to the desired length. As is shown in Fig. 8, a first piece of packaging material 802 is placed flat on a surface, and the article or item to be mailed 810 is placed on top of the first piece of packaging material 802. The cohesive material or layer 820 does not stick to the items to be shipped 810 because the cohesive material or layer 820 only sticks to itself. A second piece of packaging material 804 is placed on top of the item 810 and the first piece of packaging material 802 such that the cohesively coated surfaces of each piece of packaging material 802 and 804, respectively, are adjacent to one another. The user then presses the two layers 802 and 804 together. This ensures that the directly adjacent portions of the packaging material including the cohesive material or layer 820 form cohesive--cohesive bonds and the article or item is enclosed within the packaging material, thereby forming a self-closing and/or custom-fit package.

The packaging material can be used in manual wrapping. This packaging material may be of great benefit to those who mail and ship goods relatively infrequently (e.g., the homemaker sending a care package or birthday gift a few times a year) as well as those individuals who frequently ship items through online sites or services like Etsy or eBay. This packaging material allows such users to store only a single packaging material that will work for all of their needs while ensuring safe and protected transit and deliver of their item.

The packaging material can also be used in automated wrapping equipment, wherein the resultant package is automatically wrapped by a machine generally known in the art. Such use may be preferred by, for example, companies or corporations who manufacture or ship large volumes of goods. Use of this material would ensure protection of the goods but decrease shipping cost since a smaller package is being shipped while affording the same or better protection of the item. Further, the packaging material provides enhanced sustainability goals since environmental waste is reduced because (1) less air is being transported during shipment; and (2) less packaging is used to safely ship the item, resulting in less waste.

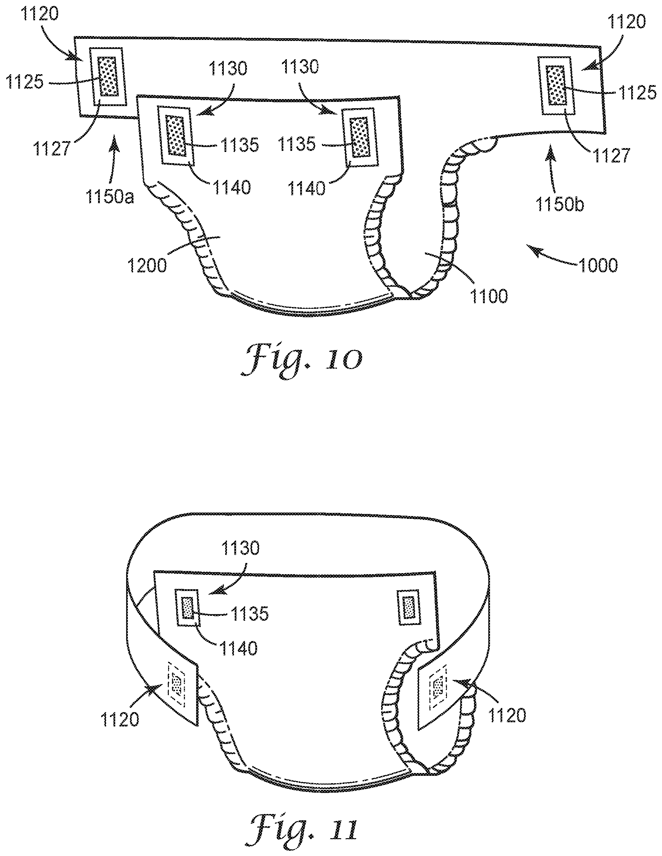

In one aspect, the presently described cohesive films and compositions are used in fastening systems. In one embodiment, the fastening systems are used in absorbent articles, such as, for example, a feminine hygiene absorbent article, a diaper or incontinence brief. An absorbent article according to the present application is described in U.S. Patent Publication No. 20170196739, the disclosure of which is incorporated herein by reference in its entirety. An exemplary absorbent article is shown in FIGS. 10 and 11. In particular, FIG. 10 shows an isometric view of a diaper or incontinence brief 1000, comprising a back sheet 1100, a top sheet 1200 and an absorbent core (now shown) therebetween. A first fastening element 1120 is affixed to the rear waist portion of the absorbent article, in particular to the inside of the rear waist portion. A second fastening element 1130 is affixed to the front waist portion of the absorbent article, in particular, to the outside of the front waist portion. The first fastening element 1120 includes a substrate 1127 and a first cohesive film 1125. The second fastening element 1130 includes a substrate 1140 and a second cohesive film 1135. In other embodiments, the first and second fastening elements do not include substrates 1127, 1140 and first and second cohesive films 1125, 1135 are disposed on back sheet 1100. In these embodiments, an optional tie-layer may be used (not shown).

In some embodiments, the diaper or incontinence brief 1000 includes a first ear 1150a, and a second ear 1150b. Both ears 1150a and 1150b extend outwardly from the rear waist portion of the diaper 1000. In these embodiments, the first fastening element is disposed on the distal end portion of the first ear 1150a and the second fastening element 1130 is disposed on the distal end portion of the top sheet 1200 so that the first cohesive film 1125 is brought into contact with the second cohesive film 1135 to releasably close the diaper 1000.

FIG 11 shows an isometric view of the diaper 1000 shown in FIG. 10, in a closed configuration. In particular, it can be seen that ears 1150a and 1150b of the diaper 1000 are shifted towards the front waist portion in order to close the diaper 1000 and fasten the first fastening element 1120 to the second fastening element 1130.

### Benefits:

The packaging materials and constructions of the present disclosure have many benefits. At least some of the benefits of these constructions or material are as follows. The packaging materials occupy less space and/or have a smaller or lower profile while providing the same protection as bulkier or thicker prior art embodiments. As a result, the packaging materials take up less space during storage, both on store shelves and in a user's home or office. Further, they cost less to ship because of their reduced profile and/or size. This is not only a benefit to manufacturers and those paying for shipping, but it's also a sustainability benefit because less gas is being used and less pollution is being produced per shipment.

Further, the packaging materials and constructions described herein are capable of packaging articles of various sizes and shapes. The user has full control over the size and shape of the material used and the package created. In this way, the shippers or packages created can be truly custom-made and/or custom-fit. This also ensures that the item being shipped is fully protected without creating environmental waste and/or excess shipping cost.

The fastening systems of the present disclosure have many benefits, including the ability of self-mating, or co-adhering to itself, ensuring proper closure of the articles to which they are adhered.

In some embodiments, the cohesive layer or material is co-adherent to itself while being able to contact all surfaces without substantially sticking, damaging, or leaving a residue which would otherwise mar the surface and/or damage the item. In some embodiments, the adhesive will remove cleanly from the article (*i.e.,* without damaging the article) being shipped while adhering sufficiently strongly to itself and to another cohesive surface so as to the secure the shipper about the article during shipping. The cohesive layer or material is preferably sufficiently adhesive to itself and to the other surface of the cushion layer so that it creates a strong bond that is sufficient to stay adhered or bonded in the desired configuration or orientation while the package is being shipped. This may include travel through varying temperatures (*e.g*., in the heat of a truck driving through the Arizona desert in July and being outside on a customer's doorstep in Alaska in January). This may also include jostling and tossing of the package during transit and delivery.

In some embodiments, the cohesive article has a tack of less than 30 gf, an adhesion to a surface other than the cohesive of less than 200 g/in, a T-peel of greater than 200 g/in, and passes the pop open test, where all tests are conducted as is described herein. In some embodiments, the cohesive article has a tack of less than 20 gf, an adhesion to a surface other than the cohesive of less than 150 g/in, a T-peel of greater than 400 g/in, and passes the pop open test, where all tests are conducted as is described herein. In some embodiments, the cohesive article has a tack of less than 10 gf, an adhesion to a surface other than the cohesive of less than 100 g/in, a T-peel of greater than 600 g/in, and passes the pop open test, where all tests are conducted as is described herein.

In some embodiments, the cohesive composition and/or articles of the present disclosure have a tack of less than 30 gf, or less than 25 gf, or less than 20 gf, or less than 15 gf, or less than 10 gf where tack is measured according to the ASTM D2979.

In some embodiments, the cohesive composition and/or articles of the present disclosure have an adhesion to a surface other than the cohesive of less than 200 g/in, or less than 175 g/in, or less than 150 g/in, or less than 125 g/in, or less than 100 g/in, or less than 75 g/in, or less than 50 g/in measured according to the PSTC-101 Test Method A test method using a Instron at 180° degree peel angle and a crosshead speed of 90 inches per minute.

In some embodiments, the cohesive composition and/or articles of the present disclosure have a T-peel of greater than 200 g/in, or greater than 300 g/in, or greater than 400 g/in, or greater than 500 g/in, or greater than 600 g/in, or greater than 700 g/in when measured according to ASTM D-1876 using a Instron at a crosshead speed of 12 in/min.

In some embodiments, the cohesive article passes the pop open test in addition to one or more of the other performance properties described herein.

The following examples describe some exemplary constructions of cohesive compositions, cohesive articles, and methods of making the cohesive compositions and articles that fall within the scope of the present disclosure. The following examples describe some exemplary constructions and methods of constructing various embodiments within the scope of the present disclosure. The following examples are intended to be illustrative, but are not intended to limit the scope of the present disclosure.

### Examples

All parts, percentages, ratios, etc. in the examples and the rest of the specification are by weight, unless noted otherwise. The following abbreviations are used: cm = centimeters; mm = millimeters; in = inch; m =meters; RPM = revolutions per minute; kg = kilograms; oz = ounces; lb = pounds; Pa = Pascals; min = minutes; hr = hours; gsm = grams per square meter (g/m²); DW = downweb (or alternatively MD = machine direction); CW = crossweb; lbf = pound-force; N = Newton; PHR = Parts per Hundred Rubber. The terms "weight %", "% by weight", and "wt%" are used interchangeably. Examples 1 to 22 are Reference Examples.

### Examples 1-7 and Comparative Examples A-C

Information about the materials used in Examples 1-7 and Comparative Examples A-C are listed below.

**Table 1. Materials Used in Examples 1-7 and Comparative Examples A-C**

| **Abbreviation** | **Description** | **Source** |
|---|---|---|
| Nipol IR 2200L | Polyisoprene Rubber | Zeon Co. |
| Vector 4411 | Styrene-isoprene-styrene triblock copolymer (thermoplastic elastomer) | TSRC Co. |
| CaCO₃ | Filler, 12µm (volume average diameter) | Omya Co. |
| Irganox 1076 | Heat Stabilizer | BASF Co. |
| Arenox DL | Heat Stabilizer | BASF Co. |
| Tinuvin 292 | UV Stabilizer | BASF Co. |

Cohesive compositions 1-7 and Comparative Examples A-C were prepared by compounding the components listed in Tables 1-4 in a twin screw extruder at 250 rpm, 300° F, and 10 lb/hour through put to form a precompounded rope of adhesive. Table 2 shows the compositions in parts per hundred rubber. Table 3 shows the compositions in wt% by component. Table 4 shows the compositions in wt% for rubber, TPE, and filler (where the rubber, TPE, and filler are based on total weight of rubber, TPE, and filler) and heat and UV Stabilizers are parts per hundred (pph) of Rubber + TPE + Filler. Table 5 shows the compositions where all components are listed in wt%.

**Table 2. Cohesive Compositions of Examples 1-7 & Comparative Examples A-C, all in PPHR (parts per hundred rubber)**

| **Example** | **Nipol IR 2200L** | **Vector 4411** | **CaCO₃** | **Irganox 1076** | **Arenox DL** | **Tinuvin 292** |
|---|---|---|---|---|---|---|
| 1 | 100 | 30 | 50 | 3.90 | 3.9 | 1.30 |
| 2 | 100 | 40 | 50 | 4.20 | 4.20 | 1.40 |
| 3 | 100 | 50 | 50 | 4.50 | 4.50 | 1.50 |
| 4 | 100 | 60 | 50 | 4.80 | 4.80 | 1.60 |
| 5 | 100 | 70 | 50 | 5.10 | 5.10 | 1.70 |
| 6 | 100 | 80 | 50 | 5.40 | 5.40 | 1.80 |
| 7 | 100 | 80 | 40 | 5.40 | 5.40 | 1.80 |
| Comp. A | 100 | 0 | 0 | 0 | 0 | 0 |
| Comp. B | 100 | 0 | 50 | 0 | 0 | 0 |
| Comp. C | 100 | 30 | 0 | 0 | 0 | 0 |

**Table 3. Cohesive Compositions of Examples 1-7 and Comparative Examples A-C (all in wt%*)**

| **Example** | **Nipol IR 2200L (wt%)** | **Vector 4411** | **CaCO₃** | **Irganox 1076** | **Arenox DL** | **Tinuvin 292** |
|---|---|---|---|---|---|---|
| 1 | 77 | 23 | 38 | 3.0 | 3.0 | 1.0 |
| 2 | 71 | 29 | 36 | 3.0 | 3.0 | 1.0 |
| 3 | 67 | 33 | 33 | 3.0 | 3.0 | 1.0 |
| 4 | 63 | 38 | 31 | 3.0 | 3.0 | 1.0 |
| 5 | 59 | 41 | 29 | 3.0 | 3.0 | 1.0 |
| 6 | 56 | 44 | 28 | 3.0 | 3.0 | 1.0 |
| 7 | 56 | 44 | 22 | 3.0 | 3.0 | 1.0 |
| Comp A | 100 | 0 | 0 | 0 | 0 | 0 |
| Comp B | 100 | 0 | 50 | 0 | 0 | 0 |
| Comp C | 77 | 23 | 0 | 0 | 0 | 0 |

| | | | | | | |
|---|---|---|---|---|---|---|
| *all in wt% based on total weight of Rubber + TPE: CaCO3, antioxidant, and UV stabilizers are part based on 100 parts of Rubber + TPE | | | | | | |

**Table 4. Cohesive Compositions of Examples 1-7 & Comparative Examples A-C**

| **Example** | **Nipol IR 2200L (wt%)*** | **Vector 4411 (wt%)*** | **CaCO₃ (wt%)*** | **Irganox 1076 (pph)*** | **Aeronox DL (pph)*** | **Tinuvin 292 (pph)*** |
|---|---|---|---|---|---|---|
| 1 | 55.6 | 16.7 | 27.8 | 2.2 | 2.2 | 0.7 |
| 2 | 52.6 | 21.1 | 26.3 | 2.2 | 2.2 | 0.7 |
| 3 | 50.0 | 25.0 | 25.0 | 2.3 | 2.3 | 0.8 |
| 4 | 47.6 | 28.6 | 23.8 | 2.3 | 2.3 | 0.8 |
| 5 | 45.5 | 31.8 | 22.7 | 2.3 | 2.3 | 0.8 |
| 6 | 43.5 | 34.8 | 21.7 | 2.3 | 2.3 | 0.8 |
| 7 | 45.5 | 36.4 | 18.2 | 2.5 | 2.5 | 0.8 |
| Comp. A | 100.0 | 0 | 0 | 0 | 0 | 0 |
| Comp. B | 66.7 | 0 | 33.3 | 0 | 0 | 0 |
| Comp. C | 76.9 | 23.1 | 0 | 0 | 0 | 0 |

| | | | | | | |
|---|---|---|---|---|---|---|
| * Rubber, TPE, and Filler in wt% based on total weight of Rubber, TPE, and Filler; Heat and UV Stabilizers are parts per hundred (pph) of Rubber + TPE + Filler | | | | | | |

**Table 5. Cohesive Compositions of Examples 1-7 & Comparative Examples A-C (all in wt%)**

| **Example** | **Nipol IR 2200L** | **Vector 4411** | **CaCO₃** | **Irganox 1076** | **Aeronox DL** | **Tinuvin 292** |
|---|---|---|---|---|---|---|
| 1 | 52.9 | 15.9 | 26.4 | 2.1 | 2.1 | 0.7 |
| 2 | 50.1 | 20.0 | 25.0 | 2.1 | 2.1 | 0.7 |
| 3 | 47.5 | 23.8 | 23.8 | 2.1 | 2.1 | 0.7 |
| 4 | 45.2 | 27.1 | 22.6 | 2.2 | 2.2 | 0.7 |
| 5 | 43.1 | 30.2 | 21.6 | 2.2 | 2.2 | 0.7 |
| 6 | 41.2 | 33.0 | 20.6 | 2.2 | 2.2 | 0.7 |
| 7 | 43.0 | 34.4 | 17.2 | 2.3 | 2.3 | 0.8 |
| Comp. A | 100 | 0 | 0 | 0 | 0 | 0 |
| Comp. B | 66.7 | 0 | 33.3 | 0 | 0 | 0 |
| Comp. C | 76.9 | 23.1 | 0 | 0 | 0 | 0 |

Various cohesive films were made using the cohesive compositions listed above. Information about the materials used in these cohesive films is provided in Table 6 below.

**Table 6. Materials Used in Cohesive Film Examples 8-14 and Comparative Examples D-F**

| **Abbreviation** | **Description** | **Source** |
|---|---|---|
| Dowlex 2045 | LLDPE | Dow Chemical Co. |
| Polyfil ABC 5000 | 50% Talc in Polyethylene | Polyfil Co. |
| Dow Elite 5960G | HDPE | Dow Chemical Co. |
| Kraton D1119 | SIS Block Copolymer | Kraton Corp. |

Seven layer cohesive films were produced on a seven layer pancake stack die (Type LF-400 Coex 7-layer from Labtech Engineering). Airflow to the die was manually controlled to achieve a blow up ratio of approximately 2:1. The bubble was subsequently collapsed approximately six feet (2 meters) above die, traversed through rollers, slit on the edges to produce two independent films, each of which were then wound onto a 3 inch (7.5 cm) core and rolled up. The feed materials were supplied by 7 independent (3/4 inch) 20 mm diameter extruders (each was a Labtech Scientific Single Screw Extruder Type LE20-30/C HA).

Layers 1-6 were fed using polymer pellets and master batch compound blends, as is known in the art. Layer 7 (outside bubble layer) was fed by precompounding a "rope" of cohesive material (described below) into a twin screw extruder that was connected to extruder #7 via a heated hose. Process conditions and formulations were as follows:

Extruders 1-7 Temperatures: 360° F, 390° F, 390° F, 390° F, 390° F, 330° F and 360° F, respectively.

Die temperature and adapter temperatures: 390° F

The thickness of each of layers 1 - 6 was 0.33 mils each. The thickness of layer 7 was 0.50 mils.

The composition of each construction was as is described in Table 7 below.

**Table 7. Cohesive Films of Examples 8-14 and Comparative Examples D-F**

| Example | Layer 1 | Layer 2 | Layer 3 | Layer 4 | Layer 5 | Layer 6 | Layer 7 |
|---|---|---|---|---|---|---|---|
| 8 | Dowlex 2045 + 7.5% ABC 5000 | Dowlex Elite 5960G | Dowlex Elite 5960G | Dowlex Elite 5960G | Dowlex Elite 5960G | Kraton D1119 | Ex. 1 Cohesive Comp. |
| 9 | Dowlex 2045 + 7.5% ABC 5000 | Dowlex Elite 5960G | Dowlex Elite 5960G | Dowlex Elite 5960G | Dowlex Elite 5960G | Kraton D1119 | Ex. 2 Cohesive Comp. |
| 10 | Dowlex 2045 + 7.5% ABC 5000 | Dowlex Elite 5960G | Dowlex Elite 5960G | Dowlex Elite 5960G | Dowlex Elite 5960G | Kraton D1119 | Ex. 3 Cohesive Comp. |
| 11 | Dowlex 2045 LLDPE + 7.5% ABC 5000 | Dow Elite 5960G HDPE | Dow Elite 5960G HDPE | Dow Elite 5960G HDPE | Dow Elite 5960G HDPE | Kraton 1119 | Ex. 4 Cohesive Comp. |
| 12 | Dowlex 2045 LLDPE + 3% EBS + 7.5% ABC5000 | Dow Elite 5960G HDPE | Dow Elite 5960G HDPE | Dow Elite 5960G HDPE | Dow Elite 5960G HDPE | Kraton 1119 | Ex. 5 Cohesive Comp. |
| 13 | Dowlex 2045 LLDPE +10% EBS | Dow Elite 5960G HDPE | Dow Elite 5960G HDPE | Dow Elite 5960G HDPE | Dow Elite 5960G HDPE | Kraton 1119 | Ex. 6 Cohesive Comp. |
| 14 | Marlex D143 mLLDPE + 7.5% ABC 5000 | Dow Elite 5960G HDPE + 20% LDPE 611A | Dow Elite 5960G HDPE + 20% LDPE 611A | Dow Elite 5960G HDPE + 20% LDPE 611A | Dow Elite 5960G HDPE + 20% LDPE 611A | Kraton 1119 | Ex. 7 Cohesive Comp. |
| Comp. D | Dowlex 2045 + 7.5% ABC 5000 | Dowlex Elite 5960G | Dowlex Elite 5960G | Dowlex Elite 5960G | Dowlex Elite 5960G | Kraton D1119 | Comp A Cohesive Comp. |
| Comp. E | Dowlex 2045 + 7.5% ABC 5000 | Dowlex Elite 5960G | Dowlex Elite 5960G | Dowlex Elite 5960G | Dowlex Elite 5960G | Kraton D1119 | Comp B Cohesive Comp |
| Comp. F | Dowlex 2045 + 7.5% ABC 5000 | Dowlex Elite 5960G | Dowlex Elite 5960G | Dowlex Elite 5960G | Dowlex Elite 5960G | Kraton D1119 | Comp C Cohesive Comp |

Cohesive compositions 15-18 were prepared by compounding the components listed below in Tables 8-11 (and described in Table 1 above) in a twin screw extruder at the processing conditions listed below in Table 12 to form pellets of adhesive. Table 8 shows the compositions in parts per hundred rubber. Table 9 shows the compositions in wt% by component. Table 10 shows the compositions in wt% for rubber, TPE, and filler (where the rubber, TPE, and filler are based on total weight of rubber, TPE, and filler) and heat and UV Stabilizers are parts per hundred (pph) of Rubber + TPE + Filler. Table 11 shows the compositions where all components are listed in wt%.

**Table 8. Cohesive Compositions of Examples 15-18***

| **Example** | **Nipol IR 2200L** | **Vector 4411** | **CaCO₃** | **Irganox 1076** | **Arenox DL** | **Tinuvin 292** |
|---|---|---|---|---|---|---|
| 15 | 100 | 80 | 50 | 5.4 | 0 | 0 |
| 16 | 100 | 80 | 50 | 1.8 | 0 | 0 |
| 17 | 100 | 80 | 50 | 0 | 0 | 0 |
| 18 | 100 | 95 | 40 | 0 | 0 | 0 |

| | | | | | | |
|---|---|---|---|---|---|---|
| **[00165]** * all in PPHR (parts per hundred rubber) | | | | | | |

**Table 9. Cohesive Compositions of Examples 15-18***

| **Example** | **Nipol IR 2200L** | **Vector 4411** | **CaCO₃** | **Irganox 1076** | **Arenox DL** | **Tinuvin 292** |
|---|---|---|---|---|---|---|
| 15 | 56 | 44 | 28 | 3.0 | 0 | 0 |
| 16 | 56 | 44 | 28 | 1.0 | 0 | 0 |
| 17 | 56 | 44 | 28 | 0 | 0 | 0 |
| 18 | 51 | 49 | 21 | 0 | 0 | 0 |

| | | | | | | |
|---|---|---|---|---|---|---|
| *Rubber and TPE in wt% based on total weight of Rubber + TPE; CaCO3, antioxidant, and UV stabilizers are part based on 100 parts of Rubber + TPE | | | | | | |

**Table 10. Cohesive Compositions of Examples 15-18***

| **Example** | **Nipol IR 2200L** | **Vector 4411** | **CaCO₃** | **Irganox 1076** | **Aeronox DL** | **Tinuvin 292** |
|---|---|---|---|---|---|---|
| 15 | 43 | 35 | 22 | 2.3 | 0 | 0 |
| 16 | 43 | 35 | 22 | 0.8 | 0 | 0 |
| 17 | 43 | 35 | 22 | 0 | 0 | 0 |
| 18 | 43 | 40 | 17 | 0 | 0 | 0 |

| | | | | | | |
|---|---|---|---|---|---|---|
| * Rubber, TPE, and Filler in wt% based on total weight of Rubber, TPE, and Filler; Heat and UV Stabilizers are parts per hundred (pph) of Rubber + TPE + Filler | | | | | | |

**Table 11. Cohesive Compositions of Examples 15-18 (all in wt%)**

| **Example** | **Nipol IR 2200L** | **Vector 4411** | **CaCO₃** | **Irganox 1076** | **Aeronox DL** | **Tinuvin 292** |
|---|---|---|---|---|---|---|
| 15 | 42 | 34 | 21 | 2.3 | 0 | 0 |
| 16 | 43 | 35 | 22 | 0.8 | 0 | 0 |
| 17 | 43 | 35 | 22 | 0 | 0 | 0 |
| 18 | 43 | 40 | 17 | 0 | 0 | 0 |

The process conditions used to make the cohesive compositions of Examples 15-18 are provided in Table 12 below.

**Table 12. Process Conditions for the Cohesive Compositions of Examples 15-18**

| **Example** | **TSE RPM** | **Throughput (lb/hr)** | **Melt (°F)** |
|---|---|---|---|
| 15 | 200 | 119 | 380 |
| 16 | 200 | 117.2 | 380 |
| 17 | 200 | 117.2 | 380 |
| 18 | 275 | 119 | 380 |

Various cohesive films were made using the cohesive compositions listed above in Tables 8-12. Information about the materials used in these cohesive films is provided in Table 13-16 below.

**Table 13. Materials Used in Cohesive Film Examples 19-22**

| **Abbreviation** | **Description** | **Source** |
|---|---|---|
| Vector 4187 | Tie Layer | TSRC Dexco |
| Total 9458 | HDPE | Total |
| Marlex D143 | LLDPE | Chevron Phillips |
| Polyfil ABC 5000 | LLDPE | Polyfil Co. |

Nine layer cohesive films were produced on a nine layer pancake stack die (Type LF-400 Coex 7-layer from Labtech Engineering). Airflow to the die was manually controlled to achieve a blow up ratio of approximately 2:1. The bubble was subsequently collapsed approximately thirty (30) feet above die, traversed through rollers, slit on the edges to produce two independent films, each of which were then wound onto a 6 inch core and rolled up. The feed materials were supplied by 9 independent (3/4 inch) 20 mm diameter extruders (each was a Labtech Scientific Single Screw Extruder Type LE20-30/C HA).

Layers 1-9 were fed using pellets and master batch compound blends, as is known in the art. Process conditions and formulations were as follows:
The extruder diameters and temperatures as well as the screen and adaptor temperatures were as shown in Table 14 below.

**Table 14. Extruder Diameters and Temperatures and Screen and Adaptor Temperatures for Cohesive Films of Examples 19-22**

| Laver | Diameter (in) | Z1 Extruder Temp (°F) | Z2 Extruder Temp (°F) | Z3 Extruder Temp (°F) | Z4 Extruder Temp (°F) | Z5 Extruder Temp (°F) | Screen Temp (°F) | Adaptor Temp (°F) |
|---|---|---|---|---|---|---|---|---|
| 9 | 2.5 | 320 | 340 | 355 | 370 | 390 | 390 | 390 |
| 8 | 2.5 | 280 | 290 | 290 | 300 | 300 | 300 | 300 |
| 7 | 2 | 280 | 290 | 290 | 300 | - | 300 | 300 |
| 6 | 2 | 340 | 400 | 370 | 360 | - | 370 | 370 |
| 5 | 2 | 340 | 350 | 350 | 350 | - | 360 | 360 |
| 4 | 2 | 340 | 400 | 370 | 360 | - | 370 | 370 |
| 3 | 2 | 340 | 350 | 350 | 350 | - | 360 | 360 |
| 2 | 2.5 | 340 | 350 | 380 | 380 | 390 | 390 | 390 |
| 1 | 2.5 | 340 | 350 | 350 | 350 | 360 | 360 | 360 |

The composition of each construction was as is described in Table 15 below.

**Table 15. Cohesive Films of Examples 19-22**

| Ex. | Layer 1 | Layer 2 | Layer 3 | Layer 4 | Layer 5 | Layer 6 | Layer 7 | Layer 8 | Layer 9 |
|---|---|---|---|---|---|---|---|---|---|
| 19 | 95% Marlex D143 + 5% Polyfil ABC5000 | Total 9458 | Marlex D143 | Total 9458 | Marlex D143 | Total 9458 | Vector 4187 | Vector 4187 | Ex. 15 Cohesive Comp. |
| 20 | 95% Marlex D143 + 5% Polyfil ABC5000 | Total 9458 | Marlex D143 | Total 9458 | Marlex D143 | Total 9458 | Vector 4187 | Vector 4187 | Ex. 16 Cohesive Comp. |
| 21 | 95% Marlex D143 + 5% Polyfil ABC5000 | Total 9458 | Marlex D143 | Total 9458 | Marlex D143 | Total 9458 | Vector 4187 | Vector 4187 | Ex. 17 Cohesive Comp. |
| 22 | 95% Marlex D143 + 5% Polyfil ABC5000 | Total 9458 | Marlex D143 | Total 9458 | Marlex D143 | Total 9458 | Vector 4187 | Vector 4187 | Ex. 18 Cohesive Comp. |

The layer thicknesses were as shown in Table 16 below:

**Table 16. Laver Thickness of Cohesive Films of Examples 19-22**

| Ex. | Layer 1 (mil) | Layer 2 (mil) | Layer 3 (mil) | Layer 4 (mil) | Layer 5 (mil) | Layer 6 (mil) | Layer 7 (mil) | Layer 8 (mil) | Layer 9 (mil) |
|---|---|---|---|---|---|---|---|---|---|
| 19 | 0.26 | 0.26 | 0.09 | 0.26 | 0.09 | 0.26 | 0.3 | 0.3 | 0.3 |
| 20 | 0.26 | 0.26 | 0.09 | 0.26 | 0.09 | 0.26 | 0.3 | 0.3 | 0.3 |
| 21 | 0.26 | 0.26 | 0.09 | 0.26 | 0.09 | 0.26 | 0.3 | 0.3 | 0.3 |
| 22 | 0.16 | 0.26 | 0.14 | 0.26 | 0.14 | 0.26 | 0.2 | 0.4 | 0.3 |

The resulting cohesive films of Examples 8-14, Comparative Examples D-F, and Examples 19-22 were tested in various ways. The test methods used were described below.

### Tack Test

Tack of the cohesive layer or portion of the 7-layer cohesive film or 9-layer cohesive film was measured using a TA-XT2i Texture Analyzer, available from Texture Technologies, Corp. according to the ASTM D2979. The multilayer cohesive film was held in a brass fixture (part no. A Tack Rig 10 supplied by Texture Technologies, Corp.) such that the cohesive surface was facing upward. A 7 mm stainless steel probe was brought into contact with the cohesive layer of the multilayer film until 100 gram force was exerted on the upwardly facing cohesive layer. After a one second contact time, the probe was raised at a speed of 0.5 mm per second, and the force of adhesion was measured as a function of the distance of the probe from the tape. The tack was then recorded at peak removal force (in grams).

### Adhesion to Adherend Surfaces Test

The 7-layer or 9-layer cohesive film was laminated to a BOPP (biaxially oriented polypropylene) pressure-sensitive adhesive tape (Scotch^{®} Heavy Duty Shipping tape #3850 was used, which is sold by 3M Co) to prevent the cohesive film from stretching during testing. The resulting construction was adhered to the adherent to be tested. The various adherend substrates tested were: polypropylene (PP), Low DensityPolyethylene (LDPE), High Density Polyethylene (HDPE), Polystyrene (PS), PolyMethylMethacrylate (PMMA), PolyVinylChloride (PVC), Polycarbonate (PC), Polyethylene (PET), Nylon 6,6, and Glass. The resulting laminated samples were aged in a 120°F oven for 24 hours. After aging the laminated samples were allowed to cool for 24 hours in a constant temperature (72 °F) and humidity (50% RH) room and tested according to the PSTC-101 Test Method A test method using a Instron at 180° degree peel angle and a crosshead speed of 90 inches per minute.

### T-Peel Test

The 7-layer or 9-layer cohesive film was laminated to a BOPP (biaxially oriented polypropylene) pressure-sensitive adhesive tape (Scotch^{®} Heavy Duty Shipping tape #3850, sold by 3M Co) to prevent the cohesive film from stretching during testing. A 1 inch x 8 inch piece of the resulting sample (cohesive film + BOPP) was cut. The film was folded onto itself such that the cohesive layers came into contact with one another. Then, a 2-kg hard rubber roller was applied at one pass in each direction (once lengthwise and backwards lengthwise) at a speed of 90 in/min. The resulting cohered multilayer stack was tested for T-peel according to ASTM D-1876 using a Instron at a crosshead speed of 12 in/min.

### Shipping (Package Pop Open) Test

A packaging construction was prepared by first cutting open a Scotch^{®} Bubble Cushion Mailer sold by 3M Company into a flat open sheet with the protective polyethylene outer layer forming first (outer) major surface and the bubble layer forming the second (inner) major surface. Layer 1 of the multilayer cohesive film was joined to the bubble layer of the sheeted mailer via use of the 3M 9472LE permanent transfer adhesive sold by 3M Company. The transfer adhesive was applied to 100% of the surface area of the bubble layer with no or minimal overlap. The result was a layered construction of polyethylene outer layer, bubble layer, adhesive layer, and the cohesive multilayer construction. This construction is referred to in this test as a laminate.

The resulting laminate was cut to a sheet of 6 inches x 11 inches. The sheet was used to wrap a cube of 3 inches x 3 inches x 2 inches (*e.g.* 5 pads of 3 in x 3 in Post-it^{®} Super Sticky notes, 3M 654-5SSY, made by 3M Company). This was done by placing the notepad on the cohesive portion of the laminate and wrapping the remaining laminate over the notepad such that the notepad was centered in half of the total laminate size. As such, all sides of the notepad were covered with the laminate. Excess laminate (approximately 1 inch) was pressed together such that the cohesive portions directly adjacent to one another stuck together. After wrapping, the wrapped package was allowed to sit in room temperature for 24 hours. Only for Examples 19-22, the wrapped package was placed in a 150°F environment during a 24 hour "wait" period. A "fail" rating resulted from the package popping open during a 24 wait period. All packages that did not pop open during the 24 hour waiting period were considered to "pass" the test.

The results of the above tests for the different examples and comparative examples were as follows:

**Table 17: Tack, T-peel and Shipping Test Results for Examples 8-14, Comparative Examples D-F, and Examples 19-22**

| Example | Tack (grams) | Initial T-peel (g/in) | Pop Open test at RT |
|---|---|---|---|
| Comp. D | 47 | 850 | Fail |
| Comp. E | 13 | 1097 | Fail |
| Comp. F | 8 | 949 | Pass |
| 8 | 8 | 656 | Pass |
| 9 | 4 | 724 | Pass |
| 10 | 5 | 417 | Pass |
| 11 | 4 | 703 | Pass |
| 12 | 7 | 490 | Pass |
| 13 | 7 | 517 | Pass |
| 14 | 9 | 329 | Pass |
| 19 | 5 | 374 | Pass |
| 20 | 6 | 410 | Pass |
| 21 | 8 | 164 | Pass |
| 22 | - | 191 | Pass |

**Table 18. Adhesion to Adherend Surfaces Test Results**

| Example | 120F PP (g/in) | 120F LDPE (g/in) | 120F HDPE (g/in) | 120F PS (g/in) | 120F PMMA (g/in) | 120F PVC (g/in) | 120F PC (g/in) | 120F PET (g/in) | 120F Nylon 66 (g/in) | 120F Glass (g/in) |
|---|---|---|---|---|---|---|---|---|---|---|
| Comp. D | 395 | 78 | 55 | 497 | 383 | 342 | 414 | 392 | 370 | 280 |
| Comp. E | 220 | 16 | 26 | 355 | 197 | 424 | 229 | 182 | 239 | 128 |
| Comp. F | 530 | 71 | 57 | 872 | 957 | 909 | 875 | 439 | 579 | 483 |
| 8 | 14 | 1 | 10 | 45 | 33 | 5 | 17 | 2 | 60 | 8 |
| 9 | 25 | 2 | 3 | 79 | 27 | 27 | 40 | 7 | 15 | 4 |
| 10 | 4 | 2 | 2 | 9 | 27 | 3 | 10 | 2 | 16 | 31 |
| 11 | 13 | 0 | 1 | 23 | 25 | 1 | 39 | 26 | 26 | 3 |
| 12 | 16 | 0 | 4 | 39 | 91 | 7 | 151 | 5 | 70 | 22 |
| 13 | 25 | 1 | 6 | 109 | 137 | 29 | 105 | 0 | 43 | 10 |
| 14 | 2 | 0 | 3 | 35 | 136 | 1 | 50 | 0 | 74 | 13 |
| 19 | 0 | 0 | 0 | 23 | 0 | 0 | 1 | 0 | 0 | 0 |
| 20 | 0 | 0 | 0 | 9 | 0 | 0 | 0 | 0 | 0 | 0 |
| 21 | 10 | 0 | 0 | 0 | 31 | 0 | 5 | 0 | 0 | 0 |
| 22 | - | - | - | 179 | - | - | - | - | - | - |

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The recitation of all numerical ranges by endpoint is meant to include all numbers subsumed within the range (*i.e.,* the range 1 to 10 includes, for example, 1, 1.5, 3.33, and 10).

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure can be determined with reference to the appended claims, along with the full scope of equivalents to which such claims are entitled.

Those having skill in the art will appreciate that many changes may be made to the details of the above-described embodiments and implementations without departing from the scope of the invention as defined by the appended claims. Further, various modifications and alterations of the present disclosure will become apparent to those skilled in the art without departing from the scope of the invention. The scope of the present application should, therefore, be determined only by the following claims.

## Claims

1. A multilayer packaging material, comprising:
a cohesive article comprising:
a cohesive portion including a cohesive composition; and
a backing portion adjacent to the cohesive portion,
the cohesive composition comprising:
30 to 70 wt% rubber;
10 to 50 wt% thermoplastic elastomer; and
10 to 45 wt% filler
wherein the wt% is based on the total weight of rubber, thermoplastic elastomer, and filler;
a cushioning layer; and
an outer layer.

2. The multilayer packaging material of claim 1, wherein the cushioning layer includes at least one of bubble wrap or foam.

3. The multilayer packaging material of any of claims 1-2, wherein the outer layer is at least one of paper, plastic, and/or nonwoven.

4. The multilayer packaging material of any of claims 1-3, wherein the outer layer is at least one of single-ply, double-ply, or triple-ply.

5. The multilayer packaging material of any of the preceding claims, wherein the cohesive composition is extrudable and/or capable of being blown as a film.

6. The multilayer packaging material of any of the preceding claims, wherein the cohesive composition comprises 35 wt% to 65 wt% rubber.

7. The multilayer packaging material of any of the preceding claims, wherein the rubber includes at least one of natural rubber, synthetic rubber, and mixtures thereof.

8. The multilayer packaging material of claim 7, wherein the synthetic rubber is 1,4 cis polyisoprene.

9. The multilayer packaging material of any of the preceding claims, wherein the cohesive composition comprises 15 wt% to 45 wt% thermoplastic elastomer.

10. The multilayer packaging material of any of the preceding claims, wherein the thermoplastic elastomer includes at least one of styrene-isoprene-styrene, styrene-isoprene/butadiene-styrene, styrene-butadiene-styrene, styrene-ethylene/butylene-styrene, styrene-ethylene/propylene-styrene, and mixtures thereof.

11. The multilayer packaging material of any of the preceding claims, wherein the thermoplastic elastomer has a total content of overall styrene units of between 10 wt% and 50 wt% based on total weight of the thermoplastic elastomer.

12. The multilayer packaging material of any of the preceding claims, wherein the filler includes at least one of expanded perlite, microspheres, expandable microspheres, ceramic spheres, zeolites, clay fillers, glass beads, silica type fillers, fumed silica, fibers, nanoparticles, talc, calcium carbonate, aluminum silicates, titanium dioxide and silicon dioxide, diatomaceous earth, wax, and any combinations thereof.

13. The multilayer packaging material of any of the preceding claims, wherein the cohesive composition includes less than 20 wt% of tackifier and/or plasticizer content based on the total weight of rubber and thermoplastic elastomer in the cohesive composition.

14. The multilayer packaging material of any of the preceding claims, wherein the cohesive composition further comprises 0.1 to 10 parts UV and/or heat stabilizer per 100 parts total rubber and thermoplastic elastomer.

15. The multilayer packaging material of claim 14, wherein the UV and/or heat stabilizers include at least one of amines, phenolics, dithiocarbamates, Tinuvian stabilizers, and UV absorbers.

## Patentansprüche

1. Ein mehrschichtiges Verpackungsmaterial, aufweisend:
einen kohäsiven Gegenstand, aufweisend:
einen kohäsiven Abschnitt, der eine kohäsive Zusammensetzung einschließt; und
einen Trägerabschnitt, der an den kohäsiven Abschnitt angrenzt,
wobei die kohäsive Zusammensetzung Folgendes aufweist:
30 bis 70 Gew.-% Kautschuk;
10 bis 50 Gew.-% thermoplastisches Elastomer; und
10 bis 45 Gew.-% Füllstoff,
wobei sich die Gewichtsprozente auf das Gesamtgewicht von Kautschuk, thermoplastischem Elastomer und Füllstoff beziehen;
eine Polsterschicht; und
eine Außenschicht.

2. Das mehrschichtige Verpackungsmaterial nach Anspruch 1, wobei die Polsterschicht mindestens eines von Luftpolsterfolie oder Schaumstoff einschließt.

3. Das mehrschichtige Verpackungsmaterial nach einem der Ansprüche 1 bis 2, wobei die Außenschicht mindestens eines von Papier, Kunststoff und/oder Vlies ist.

4. Das mehrschichtige Verpackungsmaterial nach einem der Ansprüche 1 bis 3, wobei die Außenschicht mindestens eines von einlagig, zweilagig oder dreilagig ist.

5. Das mehrschichtige Verpackungsmaterial nach einem der vorstehenden Ansprüche, wobei die kohäsive Zusammensetzung extrudierbar und/oder als Folie blasbar ist.

6. Das mehrschichtige Verpackungsmaterial nach einem der vorstehenden Ansprüche, wobei die kohäsive Zusammensetzung 35 Gew.-% bis 65 Gew.-% Kautschuk aufweist.

7. Das mehrschichtige Verpackungsmaterial nach einem der vorstehenden Ansprüche, wobei der Kautschuk mindestens eines von Naturkautschuk, synthetischem Kautschuk und Mischungen davon einschließt.

8. Das mehrschichtige Verpackungsmaterial nach Anspruch 7, wobei der synthetische Kautschuk 1,4-cis-Polyisopren ist.

9. Das mehrschichtige Verpackungsmaterial nach einem der vorstehenden Ansprüche, wobei die kohäsive Zusammensetzung 15 Gew.-% bis 45 Gew.-% thermoplastisches Elastomer aufweist.

10. Das mehrschichtige Verpackungsmaterial nach einem der vorstehenden Ansprüche, wobei das thermoplastische Elastomer mindestens eines von Styrol-Isopren-Styrol, Styrol-Isopren/Butadien-Styrol, Styrol-Butadien-Styrol, Styrol-Ethylen/Butylen-Styrol, Styrol-Ethylen/Propylen-Styrol und Mischungen davon einschließt.

11. Das mehrschichtige Verpackungsmaterial nach einem der vorstehenden Ansprüche, wobei das thermoplastische Elastomer insgesamt einen Gesamtgehalt an Styroleinheiten zwischen 10 und 50 Gew.-%, bezogen auf das Gesamtgewicht des thermoplastischen Elastomers, aufweist.

12. Das mehrschichtige Verpackungsmaterial nach einem der vorstehenden Ansprüche, wobei der Füllstoff mindestens eines von expandiertem Perlit, Mikrokugeln, expandierbaren Mikrokugeln, Keramikkugeln, Zeolithen, Tonfüllstoffen, Glasperlen, Füllstoffen vom Siliciumdioxidtyp, pyrogener Kieselsäure, Fasern, Nanoteilchen, Talk, Calciumcarbonat, Aluminiumsilikaten, Titandioxid und Siliciumdioxid, Kieselgur, Wachs und beliebigen Kombinationen davon einschließt.

13. Das mehrschichtige Verpackungsmaterial nach einem der vorstehenden Ansprüche, wobei die kohäsive Zusammensetzung weniger als 20 Gew.-% Gehalt an Klebrigmacher und/oder Weichmacher einschließt, bezogen auf das Gesamtgewicht von Kautschuk und thermoplastischem Elastomer in der kohäsiven Zusammensetzung.

14. Das mehrschichtige Verpackungsmaterial nach einem der vorstehenden Ansprüche, wobei die kohäsive Zusammensetzung ferner 0,1 bis 10 Teile UV- und/oder Wärmestabilisator pro 100 Teile Gesamtkautschuk und thermoplastisches Elastomer aufweist.

15. Das mehrschichtige Verpackungsmaterial nach Anspruch 14, wobei die UV- und/oder Wärmestabilisatoren mindestens eines von Aminen, Phenolen, Dithiocarbamaten, Tinuvian-Stabilisatoren und UV-Absorbern einschließen.

## Revendications

1. Matériau d'emballage multicouche comprenant :
un article cohésif comprenant :
une partie cohésive comportant une composition cohésive ; et
une partie de support adjacente à la partie cohésive,
la composition cohésive comprenant :
de 30 à 70 % en poids de caoutchouc ;
de 10 à 50 % en poids d'élastomère thermoplastique ; et
de 10 à 45 % en poids de charge
dans lequel le pourcentage en poids est basé sur le poids total du caoutchouc, de l'élastomère thermoplastique et de la charge ;
une couche de rembourrage ; et
une couche externe.

2. Matériau d'emballage multicouche selon la revendication 1, dans lequel la couche de rembourrage comporte au moins un parmi du papier bulle ou de la mousse.

3. Matériau d'emballage multicouche selon l'une quelconque des revendications 1 à 2, dans lequel la couche extérieure est constituée d'au moins un papier, plastique et/ou non-tissé.

4. Matériau d'emballage multicouche selon l'une quelconque des revendications 1 à 3, dans lequel la couche extérieure est au moins une parmi une simple couche, double couche ou triple couche.

5. Matériau d'emballage multicouche selon l'une quelconque des revendications précédentes, dans lequel la composition cohésive est extrudable et/ou peut être soufflée sous forme de film.

6. Matériau d'emballage multicouche selon l'une quelconque des revendications précédentes, dans lequel la composition cohésive comprend de 35 % en poids à 65 % en poids de caoutchouc.

7. Matériau d'emballage multicouche selon l'une quelconque des revendications précédentes, dans lequel le caoutchouc comporte au moins l'un des caoutchoucs naturels, synthétiques et des mélanges de ceux-ci.

8. Matériau d'emballage multicouche selon la revendication 7, dans lequel le caoutchouc synthétique est 1,4 cis polyisoprène.

9. Matériau d'emballage multicouche selon l'une quelconque des revendications précédentes, dans lequel la composition cohésive comprend de 15 % en poids à 45 % en poids d'élastomère thermoplastique.

10. Matériau d'emballage multicouche selon l'une quelconque des revendications précédentes, dans lequel l'élastomère thermoplastique comporte au moins l'un parmi styrène-isoprène-styrène, styrène-isoprène/butadiène-styrène, styrène-butadiène-styrène, styrène-éthylène/butylène-styrène, styrène-éthylène/propylène-styrène, et des mélanges de ceux-ci.

11. Matériau d'emballage multicouche selon l'une quelconque des revendications précédentes, dans lequel l'élastomère thermoplastique a une teneur totale en unités de styrène comprise entre 10 % en poids et 50 % en poids par rapport au poids total de l'élastomère thermoplastique.

12. Matériau d'emballage multicouche selon l'une quelconque des revendications précédentes, dans lequel la charge comporte au moins une perlite expansée, des microsphères, des microsphères expansibles, des sphères céramiques, des zéolites, des charges d'argile, des billes de verre, des charges de type silice, de la silice pyrogénée, des fibres, des nanoparticules, du talc, du carbonate de calcium, des silicates d'aluminium, du dioxyde de titane et du dioxyde de silicium, de la terre de diatomée, de la cire, et toute combinaison de ceux-ci.

13. Matériau d'emballage multicouche selon l'une quelconque des revendications précédentes, dans lequel la composition cohésive comporte moins de 20 % en poids d'adhésif et/ou de plastifiant par rapport au poids total de caoutchouc et d'élastomère thermoplastique dans la composition cohésive.

14. Matériau d'emballage multicouche selon l'une quelconque des revendications précédentes, dans lequel la composition cohésive comprend en outre de 0,1 à 10 parties de stabilisateur UV et/ou thermique pour 100 parties de caoutchouc total et d'élastomère thermoplastique.

15. Matériau d'emballage multicouche selon la revendication 14, dans lequel les stabilisateurs UV et/ou thermiques comportent au moins une des amines, phénoliques, dithiocarbamates, stabilisateurs Tinuvian et absorbeurs UV.
